(19) Europäisches Patentamt
European Patent Office
Office européen des brevets

(11) EP 0 679 684 B1

## (12) EUROPEAN PATENT SPECIFICATION

(45) Date of publication and mention
of the grant of the patent:
**14.07.1999 Bulletin 1999/28**

(21) Application number: **95900286.6**

(22) Date of filing: **10.11.1994**

(51) Int Cl.$^6$: **C08L 23/02**, C08L 51/06
// C08F255/00

(86) International application number:
**PCT/JP94/01906**

(87) International publication number:
**WO 95/13320 (18.05.1995 Gazette 1995/21)**

(54) **POLYOLEFIN RESIN COMPOSITION**

POLYOLEFINHARZMISCHUNG

COMPOSITION DE RESINE POLYOLEFINIQUE

(84) Designated Contracting States:
**BE DE FR GB**

(30) Priority: **12.11.1993 JP 28350293**
**16.11.1993 JP 28688793**
**29.11.1993 JP 29821593**
**07.03.1994 JP 3585394**

(43) Date of publication of application:
**02.11.1995 Bulletin 1995/44**

(73) Proprietor: **KANEGAFUCHI KAGAKU KOGYO KABUSHIKI KAISHA**
**Kita-ku Osaka-shi Osaka-fu 530 (JP)**

(72) Inventors:
• **AOYAMA, Taizo**
**Hyogo 676 (JP)**
• **FUKUDA, Ryuji**
**Hyogo 654-01 (JP)**
• **OKIMURA, Yoshihiko, 1-8, Takasago-cho**
**Hyogo 676 (JP)**
• **MASAOKA, Yoshiteru, 1-8, Takasago-cho**
**Hyogo 676 (JP)**
• **SHU, Akinori, 1-8, Takasago-cho**
**Hyogo 676 (JP)**
• **NAMURA, Kiyoyuki**
**Osaka 566 (JP)**

(74) Representative: **Türk, Gille, Hrabal**
**Patentanwälte - European Patent Attorneys,**
**Brucknerstrasse 20**
**40593 Düsseldorf (DE)**

(56) References cited:
EP-A- 0 335 649      EP-A- 0 418 861
EP-A- 0 431 733      EP-A- 0 435 247
EP-A- 0 522 233      EP-A- 0 528 600
EP-A- 0 575 809      EP-A- 0 632 070
DE-A- 2 640 059      JP-A- 4 214 710
JP-A- 5 295 044      JP-A- 52 089 155

Remarks:
The file contains technical information submitted after the application was filed and not included in this specification

## Description

The present invention relates to a polyolefin resin composition, and more particularly to a polyolefin resin composition having excellent properties such as transparency, processability, impact resistance, rigidity and surface properties and being suitably applicable to the production of various molded articles.

## BACKGROUND ART

Polyolefins have been widely utilized in various molded articles, since they are inexpensive and are superior in physical properties.

However, for example, polypropylene has the drawbacks that it is low in transparency and that it is poor in processability such as vacuum formability of the sheet (hereinafter referred to as "thermoformability), calendering, blow moldability and expansion moldability since the melt viscosity and the melt tension are small. Polypropylene also has the drawbacks that the rigidity and the low temperature impact resistance are lower as compared with polystyrene, polyvinyl chloride, and ABS resin, and furthermore it is poor in surface properties such as gloss and hardness, and coatability.

In order to improve the transparency of the polypropylene, it has been practiced to use nucleating agents, but the effect of improving the transparency is not necessarily sufficient and effects of improving the processability and properties, which are also required, are scarcely observed. Also, some sort of a nucleating agent has a problem of offensive smell at the time of processing and is restricted in use particularly in the food packaging field or the like.

Also, in order to improve the processability of polypropylene, polyethylene has been generally incorporated into polypropylene by mechanical mixing. However, the incorporation of polyethylene has the disadvantages that the transparency is impaired, and that since the processability improving effect of polyethylene is insufficient, a large amount of polyethylene is required for this purpose, thus resulting in lowering of rigidity.

It is proposed to improve the processability of polypropylene by adding to the polypropylene a modified polypropylene obtained by suspension-polymerzing a vinyl monomer in an aqueous medium in the presence of polypropylene particles (Japanese Patent Publication KoKoku No. 49-2346, No. 58-53003, No. 59-14061 and No. 63-67484). However, it has not been attempted at all to match the refraction index of the modified polypropylene with that of the polypropylene, thereby improving the transparency.

On the other hand, it is proposed to improve the transparency and impact resistance of polypropylene by graft-polymerizing onto a propylene polymer trunk a monomer component which is capable of forming a copolymer having a refraction index conforming to that of the propylene polymer trunk (Japanese Patent Publication Kokai No. 5-65319 which is similar to EP-A-0522233). However, this proposal is to provide a modified polypropylene to be used alone. It has not been proposed at all to provide a modified polypropylene to be used as an improver for transparency and processability by incorporating in a non-modified polypropylene.

For the purpose of improving the processability such as thermoformability of polypropylene, it is proposed to add to polypropylene a mixture of a polyolefin, a methacrylate polymer and a polyolefin-methacrylate graft copolymer, which is obtained by polymerizing a methacrylic acid ester monomer in the presence of the polyolefin in a hydrocarbon solvent (Japanese Patent Publication Kokai No, 2-22316). However, this proposal has drawbacks, as seen in the case of adding polyethylene, that the transparency is lowered by the addition of the mixture, and that a large amount of the mixture is required for sufficiently exhibiting the effect of improving the processability. In addition, there are problems in preparation cost and safety, since a solution polymerization at high temperatures is adopted. Further, there are problems that the workability and safety are inferior, since the solvent must be removed from the polymerization reaction mixture before adding to polypropylene.

Further, in order to improve impact resistance of polyolefins such as polypropylene, it has been generally practiced to introduce a rubber component such as ethylene-propylene rubber by mechanical mixing or block copolymerization. However, this method has the drawbacks that in addition to marked lowering of the transparency, since it is difficult to control the size of particles to be dispersed in the polyolefins, the efficiency in use of the rubber component is low, thus the effect on improvement of impact resistance is not sufficiently exhibited, and that for such a reason, a large amount of the rubber component is required, so the rigidity of the obtained mixture is decreased. Also, there arises a problem that the particle size of the dispersed rubber component is large, so the surface gloss is lowered.

On the other hand, core-shell type modifiers have been widely used as impact modifiers for vinyl chloride resins. If these modifiers are added to polypropylene as they are, they cause a problem that the transparency is lowered.

Accordingly, it is proposed to add the above-mentioned core-shell modifiers to polyolefins in the presence of specific compatibilizers (Japanese Patent Publication Kokai No. 3-185037 and U.S. Patent No. 4,997,884). However, the process steps for preparing these compatibilizers are complicated, so the use of compatibilizers increases the cost and also makes the system complicated. Further, the problem of lowering in transparency as mentioned above also remains.

EP-A-0632070 falling within the scope of Art. 54(3) EPC, discloses a modified polyolefin prepared from an aqueous suspension containing crystalline polyolefin, vinyl monomer and initiator by impregnation and polymerisation. JP-A-52 089155 discloses a resin composition comprising propylene polymer and modified propylene polymer. The modified polymer is obtained by heating an aqueous suspension containing propylene polymer particles, vinyl(idene) monomer and initiator, impregnation, and polymerising monomer by raising temperature. EP-A-0435247 discloses a thermoplastic resin composition comprising propylene polymer and graft copolymer which comprises propylene polymer and vinyl polymer. DE-A-2640059 discloses preparation of propylene polymer particles by preparing aqueous suspension of the particles, vinyl(idene) monomer and initiator, heating to impregnate particles with monomers, and raising temperature to complete polymerisation of monomer. EP-A-0528600 discloses a polymer blend comprising a polyolefin and a segmented copolymer of a non-polar olefin polymer and a polymer derived from monomer system. EP-A-0418861 discloses the preparation of a polyolefin-vinyl polymer composite by impregnation involving vinyl monomer, initiator and polyolefin, preparing an aqueous suspension and increasing temperature to polymerise the monomer. EP-A-0335649 discloses a graft copolymer which comprises a non-polar polyolefin, and poly(meth)acrylate chain and optionally another copolymerisable monomer. EP-A-0431733 discloses a polymer blend comprising a polyolefin matrix, a core-shell polymeric modifier and a polyolefin-acrylic graft copolymer. EP-A-0522233 which is similar to JP-A-5 06319 disclosed on page 2, discloses a graft copolymer comprising a propylene polymer backbone grafted with at least two different copolymerisable monomers and having a refractive index essentially the same as the backbone.

Like this, it is the actual circumstances that there has not yet been proposed a polyolefin composition which satisfies all of properties such as transparency, processability, impact resistance, rigidity and surface properties. It has been desired to develop a polyolefin composition which can satisfy all of the above-mentioned properties.

Accordingly, it is an object of the present invention to provide a polyolefin composition which can satisfy all of properties such as processability, transparency, impact resistance, rigidity and surface properties and which can be suitably used in the production of various molded articles.

A further object of the present invention is to provide a polypropylene composition having excellent properties such as processability, transparency, impact resistance, rigidity and surface properties.

## DISCLOSURE OF THE INVENTION

As a result of earnestly repeating a study in view of the above-mentioned prior art, the present inventors have found that a modified polyolefin obtained by polymerizing a specific vinyl monomer in the presence of a nonpolar polyolefin has an excellent effect of improving the transparency of polyolefins and an excellent effect of improving the processability of polyolefins such as formability of the sheets, and that by incorporating this modified polyolefin as an improver into the polyolefins, optionally with a nucleating agent and/or a specific core-shell graft copolymer, there is obtained a polyolefin composition which simultaneously satisfies properties such as transparency, processability, impact resistance, rigidity and surface properties. Thus, the present inventors have accomplished the present invention.

The present invention provides a polyolefin resin composition which comprises (A) a polyolefin and (B) 0,1 to 100 parts by weight, per 100 parts by weight of said polyolefin (A), of a modified polyolefin, wherein said modified polyolefin (B) is obtainable by preparing an aqueous suspension containing (a) a nonpolar polyolefin, (b) 1 to 500 parts by weight of a vinyl monomer per 100 parts by weight of said nonpolar polyolefin (a) and (c) 0,01 to 10 parts by weight of a radical polymerization initiator per 100 parts by weight of said vinyl monomer (b), impregnating the particles of said nonpolar polyolefin (a) with said vinyl monomer (b), and polymerizing said vinyl monomer (b) by raising the temperature of said aqueous suspension, and the refraction index of said modified polyolefin (B) is substantially identical to that of said polyolefin (A) wherein the difference in refraction index of said polyolefin (A) and said modified polyolefin (B) is at most 0,02, and wherein the vinyl monomer (b) comprises 1 to 50 % by weight of styrene and 99 to 50 % by weight of at least one of methyl methacrylate and n-butyl acrylate.

The polymerization in an aqueous system is advantageous in cost, and is also advantageous in transparency since the domain of a vinyl polymer formed in a particle of the nonpolar polyolefin (a) by the polymerization of the vinyl monomer (b) is fine. Prior to the polymerization of the vinyl monomer (b), the aqueous suspension may be optionally heated under a condition that the decomposition of the radical polymerization initiator (c) does not substantially occur, whereby the polymerization is prevented from proceeding in the state that the vinyl monomer (b) forms dispersed particles independent from the polyolefin particles (a), so the impregnation of the vinyl monomer (b) into the polyolefin particles (a) is ensured. In the obtained reaction product (modified polyolefin) are present a graft copolymer of the nonpolar polyolefin (a) and the vinyl monomer (b) wherein the vinyl polymer formed from the vinyl monomer (b) is contained dispersedly to form domains in the particles of the nonpolar polyolefin (a), a non-grafted nonpolar polyolefin (a) and a non-grafting free polymer of the vinyl monomer (b). The graft copolymer greatly contributes to the improvement of the processability.

The polyolefin composition of the present invention may further contain at least one of a nucleating agent and a core-shell type modifier having substantially the same refraction index as that of the polyolefin (A).

The nonpolar polyolefin (a) is selected from those having a good compatibility with the polyolefin (A) so that the modified polyolefin (B) obtained is easy to be dispersed into the polyolefin (A). The nonpolar polyolefin (a) may be either a crystalline polyolefin or a noncrystalline polyolefin.

The nonpolar polyolefin (a) is in general a polyolefin poor in compatiblity with more polar polymers. For examples, as the preferable nonpolar polyolefin (a) there are mentioned a homopolymer of ethylene, propylene, butylene or 4-methylpentene, a copolymer of at least two of these monomers, and a copolymer of at least one of ethylene, propylene, butylene and 4-methylpentene with other monomers copolymerizable therewith.

Represented examples of the nonpolar polyolefin (a) are, for instance, an olefin homopolymer such as polypropylene, high density polyethylene, low density polyethylene, linear low density polyethylene, polybutylene (poly-1-butene), polyisobutylene or polymethylpentene; a random or block copolymer of propylene and ethylene and/or 1-butene in any ratio such as ethylene-propylene random copolymer or ethylene-propylene block copolymer; a terpolymer of ethylene, propylene and at most 10 % by weight of a diene wherein ethylene and propylene may be present in any ratio; a cyclic polyolefin such as a copolymer of cyclopentadiene and ethylene and/or propylene; ethylene-propylene rubber; a random, block or graft copolymer of ethylene or propylene with not more than 50 % by weight of a vinyl compound such as vinyl acetate, an alkyl methacrylate, an alkyl acrylate or an aromatic vinyl compound. The nonpolar polyolefins (a) may be used alone or in admixture thereof.

Also, as the polyolefin (a) there are preferred those having a melt flow index of not more than 10 g/10 minutes, preferably not more than 5 g/10 minutes, more preferably not more than 1.0 g/10 minutes, from the viewpoint of improvement in processability. The melt flow index as shown herein means a value measured according to ASTM D1238 under a load of 2.16 kg at a temperature, for example, 230°C for propylene-based polyolefins and 190°C for ethylene-based polyolefins.

The shape or state of the nonpolar polyolefin (a) may be for instance pellets (e.g. pellets having an average particle size of 1 to 5 mm), a powder (e.g. powder having an average particle size of 200 to 1,000 $\mu$m), an aqueous latex, and an aqueous dispersion.

Preferred as the vinyl monomer (b) are those having a large copolymerizability with the nonpolar polyolefin (a) in order to raise the efficiency of production of graft copolymer.

Also, from the viewpoint of transparency, the vinyl monomer (b) is selected so that the refraction index of the obtained modified polyolefin (B), particularly the refraction index of the graft copolymer of the polyolefin (a) and the vinyl monomer (b), becomes substantially the same as the refraction index of a polyolefin (A). Preferably, the vinyl monomer (b) is selected so that the refraction index of the obtained modified polyolefin (B) becomes substantially the same as the refraction index of the polyolefin (A) and, in addition, the refraction index of the nonpolar polyolefin (a) becomes substantially the same as the refraction index of a polymer of the vinyl monomer (b).

In the present specification, the expression "the refraction index is substantially the same" means that the difference in refraction index is at most 0.02. Preferably, the difference in refraction index is at most 0.01, especially from 0 to 0.005.

The "refraction index" as used herein means one based on the values described in Polymer Handbook, third edition, published by John Wiley & Sons. Inc., 1989. The refraction index of copolymers is represented by a value obtained by proportional calculation based on the weight fractions of respective monomers (a weighted average value of refraction indices of homopolymers of monomers constituting the copolymer based on the weight fractions of the monomers).

The term "vinyl monomer" as used herein encompasses, in addition to vinyl monomers (monomers containing $CH_2=CH-$ group), monomers containing vinylidene group $CH_2=C<$ (vinylidene monomers) such as alkyl methacrylates, monomers containing $-CH=CH-$ group, and monomers containing $>C=C<$ group.

Examples of the vinyl monomer (b) are, for instance, an aromatic vinyl compound such as styrene or $\alpha$-methylstyrene; an alkyl methacrylate having a $C_1$ to $C_{22}$ alkyl group, such as methyl methacrylate, ethyl methacrylate, n-butyl methacrylate, isobutyl methacrylate, t-butyl methacrylate, 2-ethylhexyl methacrylate or stearyl methacrylate; an alkyl acrylate having a $C_1$ to $C_{22}$ alkyl group, such as methyl acrylate, ethyl acrylate, n-butyl acrylate, isobutyl acrylate, t-butyl acrylate, 2-ethylhexyl acrylate or stearyl acrylate, and an unsaturated nitrile compound such as acrylonitrile or methacrylonitrile. These vinyl monomers may be used alone, in admixture thereof, or with at least one of other vinyl monomers copolymerizable therewith (e.g. vinyl monomers having a reactive functional group such as acid anhydride group, carboxyl group, amino group, hydroxyl group or epoxy group, such as maleic anhydride, methacrylic acid, acrylic acid, methacrylamide, acrylamide, dimethylaminoethyl methacrylate, dimethylaminoethyl acrylate, hydroxyethyl methacrylate, hydroxyethyl acrylate, glycidyl methacrylate or glycidyl acrylate; and phenol group-containing methacrylic acid esters).

From the viewpoints of transparency, versatility and cost, there is usually employed, as the vinyl monomer (b), a monomer or a monomer mixture of 80 to 100 % by weight of at least one monomer selected from the group consisting of an aromatic vinyl compound, an alkyl methacrylate having a $C_1$ to $C_{22}$ alkyl group, an alkyl acrylate having a $C_1$ to $C_{22}$ alkyl group and an unsaturated nitrile compound, especially at least one monomer selected from the group consisting of the aromatic vinyl compound, the alkyl methacrylate and the alkyl acrylate, with 20 to 0 % by weight of other vinyl monomers copolymerizable therewith. In particular, as the vinyl monomer (b), there is preferably used a monomer mixture of 1 to 50 % by weight, preferably 10 to 40 % by weight, of an aromatic vinyl compound, and 99 to 50 % by weight, preferably 90 to 60 % by weight, of an alkyl methacrylate having a $C_1$ to $C_{22}$ alkyl group and/or an alkyl acrylate having a $C_1$ to $C_{22}$ alkyl group; or at least one acrylic monomer selected from the group consisting of an alkyl methacrylate having a $C_1$ to $C_{22}$ alkyl group and an alkyl acrylate having a $C_1$ to $C_{22}$ alkyl group. Styrene and its derivatives are particularly preferred as the aromatic vinyl compound, and are useful in the case that it is desired to adjust the refraction index of the modified polyolefin (B) high. Methyl methacrylate, ethyl mathacrylate, n-butyl methacrylate and cyclohexyl methacrylate are particularly preferred as the alkyl methacrylate, and are useful in the case that it is desired to adjust the refraction index of the modified polyolefin (B) low. Also, they have a large processability improving effect. Methyl acrylate, ethyl acrylate, n-butyl acrylate and 2-ethylhexyl acrylate are particularly preferred as the alkyl acrylate, and are useful in the case tht it is desired to adjust the refraction index of the modified polyolefin (B) low. They also have a large processability improving effect.

The vinyl monomer (b) is used in an amount of 1 to 500 parts by weight, preferably 5 to 200 parts by weight, more preferably 10 to 100 parts by weight, per 100 parts by weight of the nonpolar polyolefin (a). If the amount of the vinyl monomer (b) is less than 1 part by weight, the amount of the production of the graft copolymer is small, so the processability improving effect is insufficient. On the other hand, if the amount of the vinyl monomer (b) is more than 500 parts by weight, the polymerization proceeds mainly between the vinyl monomers to cause excessive agglomeration, melt-adhesion, aggregation into mass, in the aqueous suspension during the polymerization.

Radical polymerization initiators having a half-life of 1 hour at a temperature of 50° to 200°C are preferred as the radical initiator (c), since they produce radical polymerization initiation sites in the nonpolar polyolefin (a) which is substantially in the molten state, and since the polymerization of the vinyl monomer (b) and the graft polymerization of the vinyl monomer (b) efficiently proceed. Radical initiators which are oil-soluble and have a high hydrogen abstraction property, are also preferred from the viewpoint of obtaining a modified polyolefin which can more sufficiently exhibit an effect of improving the processability of the polyolefin (A) when added thereto.

Representative examples of the radical polymerization initiator (c) are, for instance, acetyl peroxide, disuccinic acid peroxide, t-butyl peroxyoctoate, benzoyl peroxide (72°C), t-butyl peroxymaleate, 1-hydroxy-1-hydroperoxydicyclohexyl peroxide, 1,1-bis(t-butylperoxy)-3,3,5-trimethylcyclohexane (87°C), t-butyl peroxycrotonate, 2,2-bis(t-butylperoxybutane) (103°C), t-butylperoxy isopropylcarbonate (99°C), t-butyl peroxypivalate (55°C), lauroyl peroxide (62°C), t-butyl peroxyisobutylate (77°C), di-t-butyl peroxide (124°C), 1,1,3,3-tetramethylbutyl peroxy-2-ethylhexanoate (65°C), 2,5-dimethyl-2,5-bis(2-ethylhexanoylperoxy)hexane (66°C), 2,5-dimethyl-2,5-bis(benzoylperoxy)hexane (100°C), t-butyl peroxyacetate (103°C), 2,5-dimethyl-di(hydroperoxy)hexane, t-butyl hydroperoxide (167°C), t-butyl cumylperoxide (121°C), p-menthane hydroperoxide (128°C), methyl ethyl ketone peroxide (105°C), di-t-butyl peroxyphthalate, t-butyl peroxybenzoate (104°C), dicumyl peroxide, (117°C), 2,5-dimethyl-2,5-di(t-butylperoxy)hexane (118°C), 2,4-pentanedione peroxide, and azobisisobutyronitrile. These initiators may be used alone or in admixture thereof. The 10 hour half-life temperature is shown in the parenthesis after the above each compound.

The radical polymerization initiator (c) is used in an amount of 0.01 to 10 parts by weight, preferably 1 to 10 parts by weight, more preferably 1 to 5 parts by weight, per 100 parts by weight of the vinyl monomer (b). When the amount of the radical initiator (c) is less than 0.01 part by weight, there is a tendency that it is hard to obtain the modified polyolefin (B) having a sufficient effect of improving the processability, since radical polymerization initiation sites for the polymerization of the vinyl monomer (b) and for the nonpolar polyolefin (a) are not sufficiently produced. When the amount of the radical initiator (c) is more than 10 parts by weight, the initiator (c) is present excessively and, therefore, polyolefin compositions prepared by using the obtained modified polyolefin (B) may cause degradation when the compositions are subjected, for instance, to thermoforming.

Since the radical polymerization initiator (c) remaining in the obtained modified polyolefin (B) becomes a cause that polyolefin compositions obtained by using the modified polyolefin (B) are degraded, for instance, when thermoformed, it is desirable to adjust the polymerization conditions so that the amount of the initator after the polymerization is not more than 20 % by weight, preferably not more than 15 % by weight, more preferably not more than 10 % by weight, further more preferably not more than 5 % by weight, of the amount of the initiator prior to the initiation of the polymerization. Also, in order to decrease the amount of the remaining initiator, the modified polyolefin (B) after the polymerization may be heated again. In that case, it is preferable to conduct such a re-heating under conditions not causing deterioration of the modified polyolefin, for instance, at a temperature lower than the polymerization temperature. Also, since heating in the coexistence of oxygen may accelerate the deterioration of the modified polyolefin, it is preferable to conduct the re-heating in an oxygen-free atmosphere such as a nitrogen atmosphere.

The amount of the initiator remaining in the modified polyolefin can be measured, for instance, by dissolving the obtained modified polyolefin in a solvent such as xylene, adding dropwise the resulting solution to a poor solvent for the modified polyolefin, such as hexane, condensing a filtrate obtained by the filtration, and determining by gas chromatography.

Upon the polymerization of the vinyl monomer (b), the nonpolar polyolefin (a), the vinyl monomer (b) and the radical polymerization initiator (c) are added to water and mixed to prepare an aqueous suspension. It is preferable to conduct the polymerization in the state that the polyolefin (a) is impregnated with the vinyl monomer (b). Prior to the polymerization, the aqueous suspension may be heated, if desired, under a condition that the decomposition of the initiator (c) does not substantially occur, in other words, at a temperature at which the vinyl monomer (b) is not substantially polymerized. Such a temperature is usually selected from T-50°C to T-10°C, preferably from T-40°C to T-10°C, wherein T is a 10 hour half-life temperature of the radical polymerization initiator (c). The impregnation of the monomer (b) into the nonpolar polyolefin (a) is accelerated by heating the aqueous suspension to such a temperature, whereby the vinyl monomer (b) is prevented from polymerizing in the state that it forms dispersed particles independent from the nonpolar polyolefin particles in the aqueous suspension.

The heating time for the impregnation varies depending on the kinds of the nonpolar polyolefin (a) and vinyl monomer (b) used but in general the heating time is preferably not more than 5 hours.

The liquid temperature of the aqueous suspension is then raised to initiate the polymerization. Preferably, the polymerization is carried out at a temperature equal to or higher than a temperature at which the crystal region of the nonpolar polyolefin (a) begins to substantially melt. The temperature at which the crystal region of the nonpolar polyolefin (a) begins to substantially melt means, in a fusion curve of the nonpolar polyolefin (a), intermediate point between the starting temperature of fusion and the melting point (temperature corresponding to the top of the peak in the fusion curve) wherein the fusion curve is one obtained by DSC method by elevating the temperature at a rate of 10°C /minute in a nitrogen stream (40 m$\ell$ /minute) from room temperature to temperature at which the polyolefin is completely melted. Preferably, the polymerization is carried out at a temperature within the range of melting point ± 20°C, especially melting point ± 10°C, from the viewpoints that the proportion of the non-crystalline portion in the nonpolar polyolefin (a) is increased and the cleavage of polyolefin chains or gellation owing to excessive heating do not excessively occur.

The polymerization time varies depending on the kinds of nonpolar polyolefin (a) and vinyl monomer (b) used, but is usually from 0.5 to 10 hours.

If the molecular weight of the modified polyolefin (graft copolymer) after the polymerization has become small owing to severance of the molecular chains, the effect of improving the processability is decreased. Therefore, it is preferable to conduct the polymerization under such conditions as not causing severance of the molecular chains. It is preferable that the weight average molecualr weight of the graft copolymer is at least 50 %, preferably at least 65 %, more preferably at least 80 %, of the weight average molecular weight of the nonpolar polyolefin (a) prior to the polymerization. The molecular weights of the nonpolar polyolefin (a) and the modified polyolefin can be obtained, for instance, by measurement by means of high temperature GPC or by estimation based on melt flow index values.

Water, suspending agent, emulsifying agent, dispersing agent or other ingredients may be suitably used in the preparation of the modified polyolefin. The kinds and amounts thereof are not particularly limited so long as the aqueous suspension containing the starting materials or the reaction products is maintained in a stable state of such an extent that it does not cause excessive agglomeration, or melt adhesion under respective conditions of temperature, pressure, and stirring in the preparation steps of the modified polyolefin. Also, a chain transfer agent such as n-dodecylmercaptan, or a polymerization inhibitor or retarder such as p-benzoquinone or 1,1-diphenyl-2-picrylhydradyl, which have been usually employed, can be used in a proper amount in order to optimize the molecular weight of the branches of the graft copolymer.

As stated above, the polymerization temperature not lower than a temperature at which the crystal region of the nonpolar polyolefin (a) begins to substantially fuse increases the proportion of the non-crystal portion in the polyolefin (a), whereby the grafting of the vinyl monomer (b) onto the non-crystal portion of the polyolefin (a) is particularly accelerated at the same time as the polymerization of the vinyl monomer (b) per se to form a non-grafted vinyl polymer. The polymerization at such a temperature is also preferable from the point that the vinyl monomer is finely dispersed into the polyolefin particles.

The size of the domains of the vinyl polymer which are formed by being finely dispersed into the particles of the polyolefin (a) is usually within the range of about 0.01 to 10 μm, and from the viewpoint of the transparency of the obtained polyolefin resin composition, it is preferable that the size is at most 3 μm, especially at most 1 μm. According to the above-mentioned preparation method, it is also possible to prepare the modified polyolefin (B) containing the domains having a size of 0.01 to 0.08 μm. The vinyl polymer constituting the domains is mainly made of the non-grafted polymer and is extracted by a solvent.

The modified polyolefin (B) of the present invention is characterized by containing a polyolefin grafted with a polymer of the vinyl monomer (b). A part of the vinyl monomer (b) is polymerized in the polyolefin particles without grafting onto the polyolefin (a) to form uniformly and finely dispersed domains of a vinyl polymer. Accordingly, when the obtained modified polyolefin (B) is mixed with the polyolefin (A), the vinyl polymer is uniformly and finely dispersed in the polyolefin (A), but the vinyl polymer-grafted polyolefin has a larger influence upon improvement in processability rather than such a uniform and fine dispersion of the vinyl polymer.

Therefore, the production of the non-grafted vinyl polymer in a less amount is preferred. Also, from the viewpoint of the transparency, it is preferable that free vinyl polymer not grafting to the polyolefin (a) is produced in the state that it is finely dispersed into the polyolefin particles, rather than being produced independently from the polyolefin particles.

The reaction product obtained by the above-mentioned aqueous suspension polymerization method usually contains the graft copolymer, the non-grafted nonpolar polyolefin and the non-grafting polymer of the vinyl monomer (b). The primary structure of the graft copolymer in these components can be estimated by conducting fractionation of the components in the reaction product and analysis.

For example, the reaction product can be fractionated to a non-grafting vinyl polymer and a mixture of a graft copolymer and a non-grafted polyolefin as a dissolved matter in a solution and a precipitate, respectively, by dissolving the reaction product in a hydrocarbon solvent such as xylene under heating, and if required, adding a good solvent for a vinyl polymer such as methyl ethyl ketone, and then cooling the solution.

The graft ratio and the content of the vinyl polymer branch in the graft copolymer can be measured by purifying the fractionated non-grafting vinyl polymer and weighing it, or by purifying the fractionated mixture of graft copolymer and non-grafted polyolefin and subjecting it, e.g., to elemental analysis and IR analysis.

Further, the molecular weight of the branch in the graft copolymer can be estimated by purifying the fractionated non-grafting vinyl polymer and measuring its molecular weight. In the present invention, the molecular weight of branch in the graft copolymer is regarded as being identical to the molecular weight of the non-grafting vinyl polymer. Also, the molecular weight obtained by purifying the fractionated mixture of graft copolymer and non-grafted polyolefin and subjecting to high temperature GPC measurement is regarded as the molecular weight of the graft copolymer.

The polyolefin resin composition of the present invention is obtained by mixing the polyolefin (A) and the modified polyolefin (B). The modified polyolefin (B) having substantially the same refraction index as that of the polyolefin (A) is incorporated into the polyolefin (A), whereby the processability can be remarkably improved without lowering the transparency of the polyolefin (A). Such a modified polyolefin (B) is obtained, in practice, by selecting a vinyl monomer or monomers from the vinyl monomers (b) as mentioned above so that a weighted average value of the refraction index or indices of homopolymer or homopolymers of respective vinyl monomer or monomers and the refraction index of the nonpolar polyolefin (a) with respect to the weight fractions is substantially identical to the refraction index of the polyolefin (A), and graft-polymerizing the vinyl monomer or monomers by a method as mentioned above.

Representative examples of the polyolefin (A) used in the present invention are, for instance, polypropylene, high density polyethylene, low density polyethylene, linear low density polyethylene, poly-1-butene, polyisobutylene, polymethylpentene, a random or block copolymer of propylene and ethylene and/or 1-butene in any ratio, a terpolymer of ethylene, propylene and at most 10 % by weight of a diene wherein ethylene and propylene may be present in any ratio, a cyclic polyolefin such as a copolymer of cyclopentadiene and ethylene or propylene, a random, block or graft copolymer of ethylene or propylene with not more than 50 % by weight of a vinyl compound such as vinyl acetate, an alkyl methacrylate, an alkyl acrylate or an aromatic vinyl compound. They may be used alone or in admixture thereof.

The present invention is particularly effective when propylene-based polyolefins containing not less than 50 % by weight, especially at least 75 % by weight, of propylene units, in particular the random copolymers with ethylene, are used as the polyolefin (A).

The refraction indices of representative polyolefin (A) are polypropylene (1.503), high density polyethylene (1.545), low density polyethylene (1.51), linear low density polyethylene (1.52), poly-1-butene (1.5125) and polymethylpentene (1.459 to 1.465).

Polyolefins having a melt flow index of not more than 10 g/10 minutes, especially not more than 5 g/10 minutes, more especially not more than 2.5 g/10 minutes, are preferred as the polyolefin (A) from the viewpoint of the processability. The melt flow index as shown herein means a value measured according to ASTM D1238 under a load of 2.16 kg at a temperature, for example, 230°C for the propylene-based polyolefins and 190°C for the ethylene-based polyolefins.

The modified polyolefin (B) is used in an amount of 0.1 to 100 parts by weight, preferably 0.1 to 20 parts by wegith, more preferably 0.1 to 10 parts by weight, per 100 parts by weight of the polyolefin (A). When the amount of the modified polyolefin (B) is less than 0.1 part by weight, it is difficult to sufficiently exhibit the effect of improving the processability. When the amount is more than 100 parts by weight, the versatility such as low cost is impaired.

The polyolefin compositions of the present invention may contain a nucleating agent in order to improve transparency, surface properties, and rigidity, and a core-shell graft copolymer in order to improve, e.g., impact resistance and processability.

Examples of the nucleating agent are, for instance, sodium benzoate, bisbenzylidenesorbitol, bis(p-methylbenzylidene)sorbitol, bis(p-ethylbenzylidene)sorbitol and sodium 2,2-methylenebis(4,6-di-t-butylphenyl) phosphite. The nucleating agents may be used alone or in admixture thereof.

The nucleating agent is used usually in an amount of 0.01 to 2 parts by weight per 100 parts by weight of the polyolefin composition. Also, the nucleating agent may be previously incorporated in the nonpolar polyolefin (a) and/or the modified polyolefin (B).

As the core-shell graft copolymer, in particular those having a refraction index substantially identical to that of the polyolefin (A) are selected and used in the present invention. The core-shell graft copolymers used in the present invention are composed of a core of a crosslinked elastomer and a hard layer of a vinyl monomer graft-polymerized as a shell layer onto the core.

As the crosslinked elastomer, there are preferred those having a glass transition temperature of not more than 25°C. Also, preferably, the monomer component used in the preparation of the graft copolymer is selected so that a polymer obtained when the monomer component is polymerized alone has a glass transition temperature of not less than 25°C.

Examples of the above-mentioned crosslinked rubber-like polymer are, for instance, a diene rubber, an acrylic rubber, an olefin rubber, a silicone rubber and other rubber-like polymers. These elastomeric polymers may be used alone or in admixture thereof. The use of crosslinked diene polymer rubbers containing at least 50 % by weight of a diene component and/or crosslinked acrylic polymer rubbers containing at least 50 % by weight of an acrylic monomer component is preferable from the viewpoint of the compatibility of the obtained core-shell graft copolymer with the polyolefin (A) and the modified polyolefin (B). The crosslinked acrylic polymer rubbers are particularly preferable from the viewpoint of good thermal stability.

Representative examples of the above-mentioned diene rubbers are, for instance, diene rubbers comprising 60 to 100 % by weight, especially 70 to 100 % by weight, of a diene compound and 0 to 40 % by weight, especially 0 to 30 % by weight, of a vinyl compound copolymerizable with the diene compound. Examples of the diene compound are, for instance, butadiene, isoprene and chloroprene. The diene compounds may be used alone or in admixture thereof. Butadiene is preferable from the viewpoints of compatibility, processability, impact resistance, surface properties and cost. Examples of the vinyl compound copolymerizable with the diene compound are, for instance, those exemplified as the vinyl monomer (b), such as aromatic vinyl compound, alkyl methacrylate having a $C_1$ to $C_{22}$ alkyl group, alkyl acrylate having a $C_1$ to $C_{22}$ alkyl group, unsaturated nitrile compound and vinyl compound having a reactive functional group such as acid anhydride group, carboxyl group, amino group or hydroxy group. These copolymerizable vinyl compounds may be used alone or in admixture thereof.

Representative examples of the above-mentioned acrylic rubbers are, for instance, acrylic rubbers comprising 60 to 100 % by weight, especially 65 to 100 % by weight, of an alkyl acrylate having a $C_2$ to $C_{22}$ alkyl group and 0 to 40 % by weight, especially 0 to 35 % by weight, of other vinyl compounds copolymerizable with the alkyl acrylate. Examples of the other vinyl compounds copolymerizable with the alkyl acrylate are, for instance, those exemplified as the vinyl monomer (b), such as aromatic vinyl compounds, alkyl methacrylates having a $C_1$ to $C_{22}$ alkyl group, methyl acrylate, unsaturated nitrile compounds, vinyl compounds having a reactive functional group such as acid anhydride group, carboxyl group, amino group or hydroxyl group. They may be used alone or in admixture thereof..

Examples of the above-mentioned olefin rubbers are, for instance, ethylene-propylene-diene rubber and butyl rubber. Examples of the above-mentioned silicone rubbers are, for instance and polydimethylsiloxane rubber.

The crosslinked rubber-like polymers can be obtained by crosslinking a rubber-like polymer as mentioned above, such as diene rubber, acrylic rubber, olefin rubber or silicone rubber. The method of the crosslinking is not particularly limited. The method can be suitably selected, according to the kind of the used rubber-like polymer, from usual methods, for instance, a method utilizing self-crosslinking of butadiene, a method using a polyfunctional crosslinking agent such as divinylbenzene or 1,3-butanediol dimethacrylate, a method using a graftlinking agent such as allyl methacrylate, allyl acrylate or diallyl phthalate, and a method using a peroxide. In case of the acrylic rubber, a method using a crosslinking agent in combination with a graftlinking agent or a method using a graftlinking agent is preferable, since active sites for grafting are produced simultaneously with the crosslinking. Preferably, the crosslinked rubber-like polymer is prepared so as to have a gel fraction resulting from the crosslinking of at least 50 % by weight, especially at least 60 % by weight.

Examples of the vinyl monomer component used for forming the shell layer of the graft copolymer are, for instance, vinyl compounds same as those exemplified as the vinyl monomer (b), such as aromatic vinyl comopunds, alkyl methacrylates having a $C_1$ to $C_{22}$ alkyl group, alkyl acrylates having a $C_1$ to $C_{22}$ alkyl group, or unsaturated nitrile compounds; and vinyl compounds having a reactive functional group such as acid anhydride group, carboxyl group, amino group or hydroxyl group. These monomers may be used alone or in admixture thereof. It is preferable to use a mixture of 50 to 100 % by weight of the aromatic vinyl compound and/or the alkyl methacrylate with 0 to 50 % by weight of other vinyl compounds copolymerizable therewith, since it is hard to cause lowering of polymerizability and cost up.

The ratio of the crosslinked rubber-like polymer to the vinyl monomer used in the preparation of the core-shell graft copolymer is from 40:60 to 95:5 by weight, preferably 40:60 to 90:10 by weight.

The core-shell graft copolymer can be prepared in a usual radical polymerization manner, and polymerization methods such as suspension polymerization and emulsion polymerization are applicable to the preparation. Emulsion polymerization is preferable from the viewpoints of control of particle size and particle structure. In the present invention, it is possible to increase the particle size of the core-shell graft copolymer by adding an acid, a salt or a coagulant at the time of the polymerization. The average particle size of the core-shell graft copolymer is preferably not more than 3 µ m, more preferably not more than 2.5 µ m, in point of improving the surface properties of the obtained polyolefin resin compositions.

In the present invention, in particular, the core-shell graft copolymers having substantially the same refraction index as that of the polyolefin (A) are used. The crosslinked rubber-like polymer as the core component and the monomer as the grafting component which forms the shell, are selected and used for the synthesis so that the refraction index of the core-shell graft copolymer is identical to that of the polyolefin (A).

For example, with respect to the synthesis of the core-shell graft copolymer having an identical refraction index to that of polypropylene, there are mentioned, as representative examples, a graft copolymerization product of 50 parts by weight of methyl methacrylate onto 50 parts by weight of a crosslinked polybutadiene rubber obtained by emulsion polymerization, and a graft copolymerization product of 27 parts by weight of methyl methacrylate and 3 parts by weight of styrene onto 70 parts by weight of a crosslinked acrylic rubber obtainable by emulsion polymerization of a monomer component comprising 70 % by weight of n-butyl acrylate, 30 % by weight of styrene and 1 % by weight of allyl methacrylate.

The core-shell graft copolymer is used in an amount of 0.01 to 50 % by weight based on the polyolefin (A). If the amount is less than 0.01 % by weight, the effects of improving the surface properties, processability and impact resistance are not sufficient. If the amount is more than 50 % by weight, properties such as heat resistance and rigidity that the polyolefin originally possesses, are impaired.

The method for preparing the polyolefin composition of the present invention is not particularly limited. For example, the polyolefin composition is prepared by mixing the polyolefin (A) and the modified polyolefin (B), optionally together with, e.g., a nucleating agent, and the core-shell graft copolymer in an usual manner such as extrusion mixing or roll mixing.

The polyolefin composition of the present invention may further contain, as occasion demands, known additives, e.g. stabilizer, lubricant and known core-shell graft copolymers as used for improving the processability of vinyl chloride resins.

Representative examples of the stabilizer are, for instance a phenol stabilizer such as pentaerythrityl-tetrakis [3-(3,5-di-t-butyl-4-hydroxyphenyl)propionate] or triethyleneglycol-bis[3-(3-t-butyl-5-methyl-4-hydroxyphenyl)propionate], a phosphorus stabilizer such as tris(monononylphenyl)phosphite or tris(2,4-di-t-butylphenyl)phosphite, and a sulfur stabilizer such as dilaurylthiodipropionate. They may be used alone or in admixture thereof. The amount of the stabilizer is usually from 0.01 to 3 parts by weight, preferably 0.05 to 2 parts by weight, per 100 parts by weight of the polyolefin (A).

Representative examples of the lubricant are, for instance, sodium, calcium, magnesium or other metal salts of a saturated or unsaturated fatty acid such as lauric acid, palmitic acid, oleic acid or stearic acid. They may be used alone or in admixture thereof. The amount of the lubricant is usually from 0.1 to 3 parts by weight, preferably 0.1 to 2 parts by weight, per 100 parts by weight of the polyolefin (A).

The polyolefin composition of the present invention has, e.g., remarkably improved excellent transparency, processability, impact resistance, rigidity and surface properties. Therefore, the polyolefin composition of the present invention can be processed into useful molded articles by means of various molding methods including molding methods by which it has been difficult to mold conventional polyolefin compositions.

The molding used for the polyolefin compositions of the present invention methods include, for instance, calendering, extrusion, thermoforming, injection molding, blow molding and expansion molding.

For instance, the polyolefin composition of the present invention can be formed into films or sheets by calendering or extrusion. The thus obtained films or sheets can be further formed into molded articles by thermoforming them at a temperature suitable for the used polyolefin composition. Also, it is possible to prepare injection molded articles or hollow molded articles by injection molding or blow molding, respectively, from pellets as obtained by extruding the polyolefin composition. Further, foamed articles can be prepared by adding a blowing agent to the polyolefin composition of the present invention and then expansion-molding it using e.g. an extruder.

BEST MODE FOR CARRYING OUT THE INVENTION

The composition of the present invention is explained in more detail based on the Examples. In the Examples, all % parts are by weight unless otherwise noted.

Preparation Example 1

Preparation of Modified Polyolefin (B-1)

A closed pressure reactor was charged with 5,000 parts of pure water, and thereto were added 700 parts of nonpolar random polypropylene particles (ethylene content 3 %, DSC fusion starting temperature 80°C, DSC melting point 146.7°C, average particle size 3 mm, MI6), 132 parts of methyl methacrylate, 100 parts of n-butyl acrylate, 68 parts of styrene, 15 parts of calcium phosphate, 6 parts of an emulsifier "LATEMUL PS"® (product of Kao Corporation) and 3.6 parts of di-t-butyl peroxide (10 hour half-life temperature 124°C). They were stirred to give an aqueous suspension. After stirring the aqueous suspension at 100°C for 1 hour, it was further heated at 140°C for 5 hours with stirring to perform the polymerization.

The obtained particles were washed with water to remove the residual monomers, catalyst, calcium phosphate and emulsifier, and dried to give a modified polyolefin (B-1). The obtained modified polyolefin (B-1) was in the form of white particles (average particle size 3 mm), and the polymerization conversion was 90 %.

The conversion means the proportion of vinyl monomer (b) converted into a polymer based on the weight of the whole vinyl monomer (b). The conversion is obtained by measuring the weight of the obtained modified polyolefin (B-1), subtracting the weight of the used nonpolar random polypropylene particles therefrom, and regarding the obtained value as the weight of the vinyl monomer (b) converted into a polymer, followed by calculation.

The calculated refraction index of the modified polyolefin (B-1) obtained from 132 parts of methyl methacrylate, 100 parts of n-butyl acrylate, 68 parts of styrene and 700 parts of the random polypropylene is 1.504. The calculated glass transition temperature of the grafting chains is 30°C.

A part of the obtained modified polyolefin (B-1) was dissolved in a seventeen-fold amount of xylene at 120°C, allowed to stand at room temperature for 2 hours, and separated by filtration to a non-grafting vinyl polymer which was a xylene-soluble fraction, and a mixture of a graft copolymer and a non-grafted polypropylene which was a xylene-insoluble fraction. After drying, the mixture of graft copolymer and non-grafted polypropylene was subjected to IR analysis, whereby it was found that the content of vinyl polymer branches in the modified polyolefin (B-1) was 10 %.

Also, the weight average molecular weight (hereinafter also referred to as "$\overline{M}w$") of the branches in the graft copolymer was estimated to be 200,000 to 400,000 by measurement of the molecular weight of non-grafting vinyl polymer by GPC.

Further, the size of domains was measured by microscopic observation of the obtained modified polyolefin (B-1) and was found to be 0.05 to 0.1 µm.

Preparation Example 2

Preparation of Modified Polyolefin (B-2)

A closed pressure reactor was charged with 5,000 parts of pure water, and thereto were added 700 parts of nonpolar low density polyethylene particles (Trademark: NISSEKI LEXLON F102, product of Nippon Petrochemicals Co., Ltd., DSC fusion starting temperature 60°C, DSC melting point 102°C, MI0.25, average particle size 3 mm) (hereinafter also referred to as "LDPE"), 261 parts of n-butyl acrylate, 39 parts of styrene, 15 parts of calcium phosphate, 6 parts of an emulsifier "LATEMUL PS"® (product of Kao Corporation) and 3.6 parts of di-t-butyl peroxide. They were stirred to give an aqueous suspension. After stirring the aqueous suspension at 80°C for 1 hour, it was further heated at 105°C for 5 hours with stirring to complete the polymerization.

The obtained particles were washed with water to remove the residual monomers, catalyst, calcium phosphate and emulsifier, and dried to give a modified polyolefin (B-2). The obtained modified polyolefin (B-2) was in the form of white particles (average particle size 3 mm), and the conversion was 90 %.

A part of the obtained modified polyolefin (B-2) was dissolved in a seventeen-fold amount of xylene at 120°C, allowed to stand at room temperature for 2 hours, and separated by filtration to a non-grafting vinyl polymer which was a xylene-soluble fraction, and a mixture of a graft copolymer and a non-grafted LDPE which was a xylene-insoluble fraction. After drying, each weight was measured to calculate a ratio of a total of the graft copolymer and the non-grafted LDPE to the non-grafting vinyl polymer, which was 77:23 in a weight ratio. From this value, the content of vinyl polymer branches in the modified polyolefin (B-2) was 10 %. Also, the weight average molecular weight $\overline{M}w$ of the branches in the graft copolymer was 50,000 to 150,000.

The calculated refraction index of the modified polyolefin (B-2) obtained from 261 parts of n-butyl acrylate, 39 parts of styrene and 700 parts of the random polyethylene is 1.503. Also, the size of domains was 0.05 to 0.1 µm.

Preparation Example 3

Preparation of Modified Polyolefin (B-3)

A closed pressure reactor was charged with 5,000 parts of pure water, and thereto were added 700 parts of ethylene polypropylene rubbers (Trademark: EP07P, product of Japan Synthetic Rubber Co., Ltd., MI0.7, average particle size 3 mm) (hereinafter also referred to as "EPR"), 90 parts of n-butyl acrylate, 210 parts of styrene, 15 parts of calcium phosphate, 6 parts of an emulsifier "LATEMUL PS"® (product of Kao Corporation) and 3.6 parts of di-t-butyl peroxide. They were stirred to give an aqueous suspension. After stirring the aqueous suspension at 60°C, for 1 hour, it was further heated at 80°C for 5 hours with stirring to perform the polymerization.

The obtained particles were washed with water to remove the residual monomers, catalyst, calcium phosphate and emulsifier, and dried to give a modified polyolefin (B-3). The modified polyolefin (B-3) was in the form of white particles (average particle size 3 mm), and the conversion was 90 %.

The calculated refraction index of the modified polyolefin (B-3) obtained from 90 parts of n-butyl acrylate, 210 parts of styrene and 700 parts of the ethylene polypropylene rubber is 1.503. Also, the size of domains was 0.1 to 0.2 μm.

With regard to the obtained modified polyolefin (B-3), a ratio of a total of the graft copolymer and the non-grafted EPR to the non-grafting vinyl polymer was measured in the same manner as in Preparation Example 2. It was 77:23 in a weight ratio. From this value, the content of vinyl polymer branches in the modified polyolefin (B-3) was 10 %. Also, the weight average molecular weight $\overline{M}w$ of the branches in the graft copolymer was 50,000 to 100,000.

Preparation Example 4

Preparation of Modified Polyolefin (B-4)

A closed pressure reactor was charged with 5,000 parts of pure water, and thereto were added 700 parts of ethylene-vinyl acetate copolymer (Trademark: Evaflex 260 product of Du-Pont Mitsui Polychemicals Company, Ltd., MI6, average particle size 3 mm) (hereinafter also referred to as "EVA"), 195 parts of n-butyl acrylate, 105 parts of styrene, 15 parts of calcium phosphate, 6 parts of an emulsifier " LATEMUL PS"® (product of Kao Corporation) and 3.6 parts of di-t-butyl peroxide. They were stirred to give an aqueous suspension. After stirring the aqueous suspension at 60°C for 1 hour, it was further heated at 80°C for 5 hours with stirring to complete the polymerization. The obtained particles were washed with water to remove the residual monomers, catalyst, calcium phosphate and emulsifier, and dried to give a modified polyolefin (B-4). The obtained modified polyolefin (B-4) was in the form of white particles (average particle size 3 mm), and the conversion was 90 %.

The calculated refraction index of the modified polyolefin (B-4) obtained from 195 parts of n-butyl acrylate, 105 parts of styrene and 700 parts of the ethylene-vinyl acetate copolymer is 1.503. Also, the size of domains was 0.05 to 0.1 μm.

With regard to the obtained modified polyolefin (B-4), a ratio of a total of the graft copolymer and the non-grafted EVA to the non-grafting vinyl polymer was measured in the same manner as in Preparation Example 2. It was 77:23 in a weight ratio. From this value, the content of vinyl polymer branches in the modified polyolefin (B-4) was 10 %. Also, the weight average molecular weight $\overline{M}w$ of the branches in the graft copolymer was 100,000 to 150,000.

Comparative Preparation Example 1

Preparation of Modified Polyolefin (B'-1)

A closed pressure reactor was charged with 5,000 parts of pure water, and thereto were added 700 parts of nonpolar random polypropylene particles (same as ones used in Preparation Example 1), 300 parts of styrene, 15 parts of calcium phosphate, 6 parts of an emulsifier "LATEMUL PS"® (product of Kao Corporation) and 3.6 parts of di-t-butyl peroxide. They were stirred to give an aqueous suspension. After stirring the aqueous suspension at 100°C for 1 hour, it was further heated at 140°C for 5 hours with stirring to complete the polymerization. The obtained particles were washed with water to remove the residual monomers, catalyst, calcium phosphate and emulsifier, and dried to give a modified polyolefin (B'-1). The modified polyolefin (B'-1) was in the form of white particles, and the conversion was 90 %.

The calculated refraction index of the modified polyolefin (B'-1) obtained from 300 parts of styrene and 700 parts of the random polypropylene is 1.530. Also, the domain size was from 0.05 to 0.1 μm.

The obtained modified polyolefin (B'-1) was subjected to IR analysis in the same manner as in Preparation Example 1, and the content of vinyl polymer branches in the modified polyolefin (B'-1) was 12 %. Also, the weight average molecular weight $\overline{M}w$ of the branches in the graft copolymer was 150,000 to 250,000.

Preparation Example 5

Preparation of Core-Shell Graft Copolymer

A crosslinked acrylic rubber was prepared by emulsion-polymerizing 100 parts of a monomer component consisting of 70 parts of n-butyl acrylate, 30 parts of styrene and 1 part of allyl methacrylate which was used as a crosslinking agent and a graftlinking agent. The obtained crosslinked acrylic rubber has an average particle size of 0.2

μ m and a gel fraction of 85 %.

To 70 parts (solid matter) of the obtained latex of crosslinked acrylic rubber was added 30 parts of a monomer component consisting of 27 parts of methyl methacrylate and 3 parts of styrene. The mixture was subjected to graft copolymerization by emulsion polymerization to give a core-shell graft copolymer [hereinafter referred to as "graft copolymer (D)"]. The final conversion was 98 %. The average particle size was 0.22 μ m, and the refraction index was 1.503 (calculated value).

This graft copolymer (D) was salted out of the obtained latex thereof, dehydrated and dried to give a powder of the graft copolymer (D) (average particle size 180 μm).

Examples 1 to 12 and Comparative Examples 1 to 6

To 100 parts of the polyolefin (A) shown in Table 1 were added the modified polyolefin shown in Table 1, a nucleating agent (trade mark: GELALL DH, product of Shin Nihon Rika Kabushiki Kaisha, bis(p-methylbenzyliden) sorbitol) and the core-shell graft copolymer (D) obtained in Preparation Example 5 in Proportions shown in Table 1. The mixture was kneaded and extruded at 200°C and 100 rpm using a twin-screw extruder (screw diameter: 44 mm, L/D: 30) to give a pelletized polyolefin resin composition (hereinafter also referred to as "PO composition").

The processability, impact resistance, flexural elasticity, transparency, melt tension and surface gloss were estimated by the following methods using the obtained PO composition. The results are shown in Table 2.

In the above procedures, in case of incorporating the nucleating agent, the polyolefin (A), the modified polyolefin and the nucleating agent were mixed and then kneaded by the twin-screw extruder to give a pelletized PO composition. In case of incorporating the core-shell graft copolymer (D), the polyolefin (A), the modified polyolefin and the graft copolymer (D) were mixed and then kneaded by the twin-screw extruder to give a pelletized PO composition.

Also, in Table 1, PP indicates a polypropylene (trade mark: Hipol-B-230, product of Mitsui Petrochemical Industries, Ltd., refraction index 1.500 (found value), MI 0.5) (hereinafter also referred to as "PP") which was prepared by copolymerizing with 3 % of ethylene, LDPE indicates a low density polyethylene (trade mark: Nisseki Lexlon F102, product of Nippon Petrochemicals Co., Ltd.), ERP indicates an ethylene-propylene rubber (trade mark: EP07P, product of Japan Snythetic Rubber Co., Ltd.), and EVA indicates an ethylene-vinyl acetate copolymer (trade mark: Evaflex 260, product of Du pont-Mitsui Polychemicals Company, Ltd.).

(Processability)

A roll sheet having a thickness of 1 mm was prepared by roll-mixing a PO composition at 200°C for 3 minutes. Two sheets of the obtained roll sheet were laminated with each other, press-molded under conditions of 200°C x 30 kg/cm$^2$ x 10 minutes, and then cooled at ordinary temperature under conditions of 50 kg/cm$^2$ x 10 minutes to give a sheet having a thickness of 1.5 mm. This sheet was cut to give a test specimen of 100 mm square.

The obtained specimen was fixed by a frame having an opening of 76 mm x 76 mm. A metal measure for measuring a draw down was attached to the leg portion of the frame, the sheet fixed by the frame was heated in an oven at 190°C for 30 minutes, and the draw down (mm) at the center portion of the sheet was measured.

(Transparency)

A 30 mm square test specimen having a thickness of 1.0 mm was prepared in the same as above (processability), and the transparency thereof was measured according to ASTM-D-1003. In Table 1, T indicates total light transmittance.

(Impact resistance)

A test specimen having a thickness of 0.006 m (1/4 inch) was prepared in the same manner as above (processability), and the notched Izod impact strength was measured according to ASTM-D256.

(Flexural elasticity)

A test specimen having a thickness of 0.006 m (1/4 inch) was prepared in the same manner as above (processability), and the flexural elasticity was measured according to ASTM-D790.

(Melt tension)

Using a PO composition, the melt tension was measured by Capirograph made by Toyo Seiki Seisaku-sho, Ltd. with a die having a diameter of 1 mm and a length of 10 mm at 200°C, rate of extrusion 5 mm/minute and rate of drawing 1 m/minute.

(Surface gloss)

A PO composition was subjected to T-die extrusion at 230°C by a single screw T die extruder (screw diameter: 50 mm, L/D: 30) to give a sheet having a width of 300 mm and a thickness of 0.5 mm. The surface gloss of the obtained sheet was visually observed, and estimated according to the following ratings.

(Ratings of estimation)

A:    Gloss is very high.
B:    Gloos is high.
C:    Gloss is low.

Table 1

| Ex. No. | Polyolefin (A) | | | Modified Polyolefin (B) | | | Amount of nucleating agent | Amount of core-shell graft copolymer |
|---|---|---|---|---|---|---|---|---|
| | Kind | Refraction Index | Amount | Kind | Refraction Index | Amount | | |
| 1 | PP | 1.500 | 100 | B-1 | 1.504 | 1 | — | — |
| 2 | PP | 1.500 | 100 | B-1 | 1.504 | 5 | — | — |
| 3 | PP | 1.500 | 100 | B-2 | 1.503 | 5 | — | — |
| 4 | PP | 1.500 | 100 | B-3 | 1.503 | 5 | — | — |
| 5 | PP | 1.500 | 100 | B-4 | 1.503 | 1 | — | — |
| 6 | PP | 1.500 | 100 | B-4 | 1.503 | 5 | — | — |
| 7 | PP | 1.500 | 100 | B-4 | 1.503 | 10 | — | — |
| 8 | PP | 1.500 | 100 | B-1 | 1.504 | 5 | 0.5 | — |
| 9 | PP | 1.500 | 100 | B-2 | 1.503 | 5 | 0.5 | — |
| 10 | PP | 1.500 | 100 | B-3 | 1.503 | 5 | 0.5 | — |
| 11 | PP | 1.500 | 100 | B-4 | 1.503 | 5 | 0.5 | — |
| 12 | PP | 1.500 | 100 | B-1 | 1.504 | 5 | — | 10 |
| Com Ex. 1 | PP | 1.500 | 100 | — | — | — | — | — |
| Com Ex. 2 | PP | 1.500 | 100 | B'-1 | 1.530 | 1 | — | — |
| Com Ex. 3 | PP / LDPE | — | 100 / 5 | — | — | — | — | — |
| Com Ex. 4 | PP / LDPE | — | 100 / 20 | — | — | — | — | — |
| Com Ex. 5 | PP / EPR | — | 100 / 5 | — | — | — | — | — |
| Com Ex. 6 | PP / EVA | — | 100 / 5 | — | — | — | — | — |

EP 0 679 684 B1

Table 2

| Ex. No. | Melt tension (g) | Impact resistance (kg·cm/cm) | | Flexural elasticity (kg/cm²) | Transparency (%) | | Processability (Draw down) (mm) | Surface gloss |
|---|---|---|---|---|---|---|---|---|
| | | 23°C | -20°C | | T | Haze | | |
| 1 | 4.2 | 20 | 2 | 8000 | 88 | 69 | 18 | A |
| 2 | 5.0 | 22 | 3 | 7500 | 88 | 64 | 1 | A |
| 3 | 4.6 | 24 | 3 | 7000 | 89 | 64 | 13 | A |
| 4 | 5.0 | 27 | 5 | 6000 | 89 | 72 | 20 | A |
| 5 | 4.1 | 23 | 3 | 8000 | 87 | 67 | 30 | A |
| 6 | 4.8 | 26 | 5 | 7500 | 88 | 64 | 16 | A |
| 7 | 5.0 | 30 | 7 | 6500 | 87 | 64 | 10 | A |
| 8 | 5.0 | 22 | 3 | 9000 | 89 | 21 | 1 | A |
| 9 | 5.0 | 24 | 3 | 8500 | 88 | 31 | 10 | A |
| 10 | 5.0 | 27 | 3 | 7000 | 88 | 49 | 18 | A |
| 11 | 5.0 | 26 | 3 | 9000 | 88 | 20 | 12 | A |
| 12 | 5.0 | 30 | 7 | 7500 | 88 | 64 | 1 | A |
| Com Ex. 1 | 3.8 | 20 | 2 | 8000 | 88 | 75 | 90 | C |
| Com Ex. 2 | 4.3 | 22 | 3 | 8000 | 75 | 76 | 3 | A |
| Com Ex. 3 | 4.0 | 21 | 2 | 6000 | 86 | 75 | 60 | C |
| Com Ex. 4 | 4.2 | 24 | 2 | 5500 | 84 | 79 | 40 | C |
| Com Ex. 5 | 4.2 | 24 | 3 | 6000 | 75 | 75 | 60 | C |
| Com Ex. 6 | 4.2 | 24 | 3 | 6500 | 88 | 75 | 50 | C |

From the results shown in Table 2, it is found that nonpolar polyolefins (a) mixed with the modified polyolefins (B-1) to (B-4) have a remarkably improved draw down which comes into question in processing such as thermoforming, and blow molding, in addition to improvement in transparency. Also, it is found that they are superior in gloss as compared with polypropylene alone. Further, it is found that ones using the modified polyolefins (B-3) and (B-4) are improved in impact resistance.

Also, in the case that the refraction indices of the polyolefin (A) and the modified polyolefine (B) are not substantially identical such that the difference thereof is 0.030 as observed in Comparative Example 2, the transparency is inferior as compared with the present invention.

Also, Comparative Examples 3 to 6 wherein LDPE, EPR or EVA is incorporated instead of the modified polyolefin (B), are inferior in transparency, processability and surface gloss as compared with the present invention.

Also, from the result shown in Table 2, it is found that in case of incorporating a nucleating agent as in Examples 8 to 11, the transparency is remarkably improved, to say nothing of improvement in processability.

Further, in the case that a core-shell graft copolymer having substantially the same refraction index as that of a polyolefin is incorporated as seen in Example 12, the impact resistance is also remarkably improved.

Preparation Example 6

A closed pressure reactor was charged with 5,000 parts of pure water, and thereto were added 700 parts of random polypropylene particles (ethylene content 3 %, DSC fusion starting temperature 80°C, DSC melting point 146.7°C, refraction index 1.503), 60 parts of styrene, 135 parts of methyl methacrylate, 105 parts of n-butyl acrylate, 3.6 parts of di-t-butyl peroxide (10 hour half-life temperature 124°C), ), 100 parts of calcium phosphate and 6 parts of an emulsifier "LATEMUL PS"® (product of Kao Corporation). They were stirred to give an aqueous suspension. After stirring the aqueous suspension at 100°C for 1 hour, it was further heated at 140°C for 5 hours with stirring to complete the polymerization. The obtained particles were washed with water to remove the calcium phosphate and LATEMUL PS®, and dried to give a modified polyolefin (B-5). The obtained modified polyolefin (B-5) was in the form of white particles, and the refraction index (calculated value) was 1.503 and the conversion was 90 %.

The calculated refraction index of the vinyl copolymer obtained from 135 parts of methyl methacrylate, 105 parts of n-butyl acrylate and 60 parts of styrene is 1.502. The glass transition temperature (calculated value) is 28°C. The size of domains of such a copolymer in the modified polypropylene was 0.08 μm.

The results are shown in Table 3.

Preparation Examples 7 to 9 and Comparative Preparation Example 2

Modified polypropylenes (B-6) to (B-8) and (B'-2) were prepared in the same manner as in Preparation Example 6 except that the composition was changed as shown in Table 3.

The refraction index (calculated value) of the obtained modified polypropylene is shown in Table 3 together with the refraction index (calculated value) of a copolymer made of vinyl monomer (b) and the size of domains.

Also, the abbreviations shown in Table 3 are as follows:

MMA: Methyl methacrylate
CHMA: Cyclohexyl methacrylate
BA: n-Butyl acrylate
St: Styrene

Table 3

| Pre Ex. No. | Modified polypropylene (part) | | | | | | Refraction index (cald.) of copolymer of component (b) | Size of domains of copolymer of component (b) (μm) | Refraction index (cald.) of modified polypropylene | Mark of modified polypropylene |
|---|---|---|---|---|---|---|---|---|---|---|
| | Polyolefine (a) (PP) | Monomer component (b) | | | | | | | | |
| | | MMA | CHMA | BA | St | | | | |
| 6 | 700 | 135 | – | 105 | 60 | 1.502 | 0.08 | 1.503 | B-5 |
| 7 | 700 | – | – | 225 | 75 | 1.498 | 0.09 | 1.501 | B-6 |
| 8 | 700 | 270 | – | – | 30 | 1.500 | 0.1 | 1.502 | B-7 |
| 9 | 700 | – | 300 | – | – | 1.507 | 0.1 | 1.504 | B-8 |
| Com.Pre. Ex.1 | 700 | – | – | – | 300 | 1.592 | 0.08 | 1.530 | B'-1 |
| Com.Pre. Ex.2 | 700 | – | – | 60 | 240 | 1.567 | 0.1 | 1.522 | B'-2 |

17

Example 13

To 100 parts of propylene homopolymer [trade mark Hipol-B-200, product of Mitsui Petrochemical Industries, Ltd., melt flow index 0.5 g/10 minutes at 230°C, refraction index 1.503 (value described in Polymer Handbook, third edition)] (hereinafter referred to as "PP") was added 1 part of the modified polypropylene (B-5). The mixture was kneaded and pelletized by extruding at 200°C and 100 rpm using a twin-screw extruder (screw diameter: 44 mm, L/D: 30).

A roll sheet, test specimens and sheet were prepared using the obtained pellets in the same manner as in Example 1, and the respective physical properties were measured in the same manner as in Example 1.

The results are shown in Table 4.

Examples 14 to 18 and Comparative Examples 7 to 11

Pelletized polyolefin resin composition was prepared in the same manner as in Example 13 except that the composition was changed as shown in Table 4.

The results of measuring the physical properties are shown in Table 4.

The LDPE in the Table 4 indicates a low density polyethylene having a melt flow index of 0.25 g/10 minutes at 190°C.

From the results shown in Table 4, it is found that as mentioned in Example 13 to 18, any of polyolefins mixed with the modified polypropylene obtained in Preparation Examples 6 to 9 are small in haze and have a remarkably improved transparency, a low draw down which is an index for thermoforming, and blow molding and a remarkably improved processability. At the same time it is found that they have excellent surface gloss as compared with a polyolefin alone and that as compared with polyolefins mixed with the modified polypropylenes (B'-1) and (B'-2) which were obtained in Comparative Preparation Example 1 and 2, T (total light transmittance) thereof is high, haze is low and particularly a transparency is excellent.

Examples 19 and 20

Pelletizing was carried out in the same manner as in Example 15 (Example 19) and Example 16 (Example 20) except that a bis(p-methylbenzyliden)sorbitol (trade mark: GELALL DH, product of Shin Nihon Rika Kabushiki Kaisha) as a nucleating agent was added in an amount of 0.5 parts per 100 parts of the polyolefin resin composition. A roll sheet, test specimen and sheet were prepared using the pellets.

The respective physical properties were measured in the same manner as in Example 1, using the obtained roll sheet, test specimen and sheet. The results are shown in Table 4.

From the results shown in Table 4, it is found that in case where the nucleating agent is further added as in Examples 19 and 20, not only a processability is remarkably improved, but also a transparency is further improved remarkably.

Example 21

Pelletizing was carried out in the same manner as in Example 15 except that the powder of the core-shell graft copolymer (D) obtained in Preparation Example 5 was added in an amount of 10 parts per 100 parts of the polyolefin (A). A roll sheet, test specimen and sheet were prepared, using the pellets.

The respective physical properties were measured in the same manner as in Example 1, using the obtained roll sheet, test specimen and sheet. The results are shown in Table 4.

From the results shown in Table 4, it is found that in case where the core-shell graft copolymer having substantially the same refraction index as that of the polyolefin is added as in Example 21, not only a transparency and processability are improved, but also impact resistance is very much improved.

Table 4

| Ex. No. | Ingredients (part) | | | Melt tension (g) | Impact resistance (kg·cm/cm) | | Transparency (%) | | Flexural elasticity (kg/cm²) | Processability (Draw down) (mm) | Surface gloss |
|---|---|---|---|---|---|---|---|---|---|---|---|
| | Polyolefin (A) | Modified polypropylene (B) | Others | | 23°C | −20°C | T | Haze | | | |
| 13 | PP (100) | B–5 (1) | | 4.2 | 3 | 2 | 88 | 69 | 14000 | 18 | A |
| 14 | PP (100) | B–5 (2.5) | | 4.8 | 4 | 3 | 88 | 68 | 14000 | 9 | A |
| 15 | PP (100) | B–5 (5) | | 5 | 4 | 3 | 89 | 67 | 15000 | 1 | A |
| 16 | PP (100) | B–6 (5) | | 5.2 | 4 | 3 | 87 | 67 | 14000 | 0 | A |
| 17 | PP (100) | B–7 (5) | | 5 | 4 | 3 | 88 | 69 | 14500 | 22 | A |
| 18 | PP (100) | B–8 (5) | | 4.9 | 4 | 3 | 87 | 69 | 14700 | 22 | A |
| 19 | PP (100) | B–5 (5) | C (0.5) | 5 | 4 | 3 | 89 | 41 | 16000 | 1 | A |
| 20 | PP (100) | B–6 (5) | C (0.5) | 5 | 4 | 3 | 89 | 40 | 16000 | 1 | A |
| 21 | PP (100) | B–5 (5) | C (10) | 5 | 7 | 5 | 89 | 69 | 14000 | 1 | A |
| Com. Ex.7 | PP(100) | − | − | 3.8 | 3 | 2 | 88 | 75 | 14000 | 90 | C |
| Com. Ex.8 | PP(100) LDPE (20) | − | − | 4.2 | 4 | 2 | 85 | 76 | 11000 | 40 | C |
| Com. Ex.9 | PP(100) LDPE(50) | − | − | 4.3 | 4 | 2 | 80 | 80 | 9000 | 30 | C |
| Com. Ex.10 | PP(100) | B'–1 (5) | − | 4.3 | 4 | 3 | 70 | 85 | 14000 | 5 | A |
| Com. Ex.11 | PP(100) | B'–2 (5) | − | 4.3 | 5 | 4 | 75 | 80 | 11000 | 3 | A |

EP 0 679 684 B1

Preparation Examples 10 to 14

A closed pressure reactor was charged with 1,000 parts of pure water, and thereto were added 230 parts of crystalline random polypropylene particles (DSC fusion starting temperature 80°C, DSC melting point 146°C, melt flow index 4.3 g/10 minutes at 230°C, weight average molecular weight 400,000), 45 parts of methyl methacrylate, 35 parts of n-butyl acrylate, 20 parts of styrene, di-t-butyl peroxide (10 hour half-life temperature 124°C) in an amount shown in Table 5, 10 parts of calcium phosphate and 0.3 parts of an emulsifier "LATEMUL PS"® (product of Kao Corporation). They were stirred to give an aqueous suspension. After stirring the aqueous suspension at 100°C for 1 hour, it was further heated at 140°C for 5 hours with stirring to complete the polymerization. The obtained particles were washed with water, and dried to give modified polypropylenes (B-9) to (B-13) in the form of white particles. The calculated refraction index of these modified polypropylenes is 1.503.
With regard to the modified polypropylenes (B-9) to (B-13), a grafting amount of the vinyl polymer comprising the vinyl monomer (b), weight average molecular weight of the graft copolymer, and an amount and percent of a remaining radical polymerization initiator (c) (di-t-butylperoxide) were measured respectively by the following methods. The results are shown in Table 5.

(1) Grafting amount of vinyl polymer

An egg-plant type flask equipped with a cooling tube was charged with a modified polypropylene resin composition and xylene to dissolve the modified polypropylene in xylene at 120°C. The mixture is allowed to stand at ordinary temperature and separated by filtration to a precipitate and a filtrate. The precipitate was dried to give a mixture of the graft copolymer and non-grafted polypropylene, and xylene was removed from the filtrate by the use of an evaporator to give a vinyl polymer.
The infrared absorption spectrum of the obtained precipitate was measured with FT-IR (product of Shimadzu Corporation, FT-IR8100), and an amount (part) of the vinyl polymer grafted based on 100 parts of the polypropylene was obtained from an absorption peak ratio of the polypropylene to the vinyl polymer.

(2) Weight average molecular weight of graft copolymer

With regard to the precipitates obtained in the same way as in the above-mentioned (1), measurements were made by a high temperature GPC (product of Nippon Milipore limited Kabushiki Kaisha, Waters 150CV)

(3) Amount of remaining radical polymerization initiator (c)

After dissolving the modified polypropylene to xylene, the mixture was added dropwise to hexane which is a poor solvent of the modified polypropylene. This was filtrated and the obtained filtrate was condensed to determine an amount of the radical polymerization initiator (c) by the use of a gas chromatography (product of Shimadzu Corporation, GC14A). From this result, the amount (g) of the remaining radical polymerization initiator per 330 g of the obtained modified polypropylene was obtained.

(4) Percent of remaining radical polymerization initiator

The percentage (% by weight) of the remaining radical polymerization initiator (c) was obtained from the amount of the remaining initiator (c) obtained in the above-mentioned (3) and the mixing amount of the remaining initiator (c).

Preparation Example 15

Modified polypropylenes (B-14) were obtained in the same manner as in Preparation Example 11 except that there was used crystalline random polypropylene particles having a DSC fusion starting temperature of 60°C, a DSC melting point of 144°C, a melt flow index of 0.6 g/10 minutes at 230°C and a weight average molecular weight of 640,000. The obtained modified polypropylene (B-14) was in the form of white particles.
The results are shown in Table 5.

Preparation Example 16

Modified polypropylenes (B-15) were obtained in the same manner as in Preparation Example 11 except that an aqueous suspension was not heated at 100°C for one hour and not stirred. The obtained modified polypropylene (B-15) was in the form of white particles.

The results are shown in Table 5.

Preparation Example 17

Modified polypropylenes (B-16) were obtained in the same manner as in Example 14 except that the heating and stirring time at 140°C was changed to seven hours. The obtained polypropylene (B-16) was in the form of white particles.

The results are shown in Table 5.

Preparation Example 18

Modified polypropylenes (B-17) were obtained in the same manner as in Example 12 except that the heating and stirring time at 140°C was changed to three hours. The obtained polypropylene (B-17) was in the form of white particles.

The results are shown in Table 5.

Preparation Examples 19 and 20

Polypropylenes (B-18) and (B-19) were obtained in the same manner as in Preparation Example 10 except that the melting amount of di-t-butylperoxide was changed to 0.3 part (Preparation Example 19) or 8 parts (Preparation Example 20). The obtained polypropylene was in the form of white particles.

The results are shown in Table 5.

EP 0 679 684 B1

Table 5

| Preparation Ex. No. | Amount of initiator (c) (part) | Grafting amount of vinyl polymer (part) | Weight average molecular weight of graft copolymer | Amount of remaining initiator (c) (g) | Percent of remaining initiator (c) (%) | Abbrev. of modified polypropylene (B) |
|---|---|---|---|---|---|---|
| 10 | 1.2 | 13 | 400000 | 0.10 | 8 | B-9 |
| 11 | 1.5 | 14 | 400000 | 0.13 | 9 | B-10 |
| 12 | 2 | 14 | 390000 | 0.18 | 9 | B-11 |
| 13 | 2.4 | 16 | 380000 | 0.21 | 9 | B-12 |
| 14 | 4 | 17 | 360000 | 0.36 | 9 | B-13 |
| 15 | 1.5 | 14 | 640000 | 0.14 | 9 | B-14 |
| 16 | 1.5 | 14 | 400000 | 0.12 | 8 | B-15 |
| 17 | 4 | 17 | 360000 | 0.18 | 4 | B-16 |
| 18 | 2 | 13 | 400000 | 0.35 | 18 | B-17 |
| 19 | 0.3 | 8 | 400000 | 0.03 | 10 | B-18 |
| 20 | 8 | 17 | 210000 | 0.78 | 10 | B-19 |

From the results in Table 5, it is estimated that these modified polypropylenes (B-9) to (B-17) are excellent in an effect of improving processability, from the points that any of the modified polypropylenes (B-9) to (B-17) obtained in Preparation Examples 10 to 18 have much grafting amount, a weight average molecular weight of the graft copolymers is not less than 90 % of the weight average molecular weight of the crystalline polyolefin (a) used and a percent of the remaining radical polymerization initiator (c) is not more than 18 %. On the contrary, it is estimated that the polypropylenes (B-18) and (B-19) obtained in the Preparation Examples 19 and 20 have a low effect of improving processability from the points that in case where a mixing amount of the radical polymerization initiator (c) is low like (B-18), the percent of the initiator is low but the grafting amount of the vinyl polymer is small, and also in case where the mixing amount of the radical polymerization initiator (c) is much, the weight average molecular weight of the graft copolymer is much smaller than that of the crystalline polyolefin (a) used.

Example 22

A polyolefin resin composition was obtained by dry-blending 2 parts of the modified polypropylene (B-9) and 100 parts of polypropylene (Trade mark: Hipol-B-200, product of Mitsui Petrochemical Industries, Ltd., melt flow index at 230°C: 0.5 g/10 minutes) (hereinafter referred to as PP).

Izod impact resistance, flexural elasticity and draw down were measured using the obtained composition. The results are shown in Table 6.

Examples 22 to 32 and Comparative Example 12

A polyolefin resin composition was obtained in the same manner as in Example 22 except that the components shown in Table 6 were used. The results are shown in Table 6.

LDPE in Table 6 indicates a low density polyethylene having a melt flow index of 0.25 g/10 minutes at 190°C.

EP 0 679 684 B1

Table 6

| Ex. No. | Ingredients (part) | | | Physical properties | | | |
|---------|--------------------|--|--|---------------------|--|--|--|
| | Polyolefin (A) | Modified polypropylene (B) | Others | Impact resistance (kg·cm/cm) | | Flexural elasticity (kg/cm²) | Draw down (mm) |
| | | | | 23℃ | −20℃ | | |
| 22 | PP(100) | B−9 (2) | − | 3 | 2 | 14000 | 17 |
| 23 | PP(100) | B−10 (2) | − | 3 | 2 | 13000 | 16 |
| 24 | PP(100) | B−11 (2) | − | 3 | 2 | 14000 | 18 |
| 25 | PP(100) | B−12 (2) | − | 3 | 2 | 13000 | 18 |
| 26 | PP(100) | B−13 (2) | − | 3 | 2 | 14000 | 19 |
| 27 | PP(100) | B−14 (2) | − | 3 | 2 | 14000 | 8 |
| 28 | PP(100) | B−15 (2) | − | 3 | 2 | 14000 | 16 |
| 29 | PP(100) | B−16 (2) | − | 3 | 2 | 14000 | 17 |
| 30 | PP(100) | B−17 (2) | − | 3 | 2 | 14000 | 19 |
| 31 | PP(100) LDPE(20) | B−10 (2) | − | 4 | 2 | 11000 | 19 |
| 32 | PP(100) LDPE(50) | B−10 (2) | − | 4 | 2 | 9000 | 18 |
| 33 | PP(100) | B−18 (2) | − | 3 | 2 | 14000 | 25 |
| 34 | PP(100) | B−19 (2) | − | 3 | 2 | 13000 | 35 |
| Com. Ex.12 | PP(100) | − | − | 3 | 2 | 14000 | 90 |

24

**Claims**

1. A polyolefin resin composition which comprises (A) a polyolefin and (B) 0,1 to 100 parts by weight, per 100 parts by weight of said polyolefin (A), of a modified polyolefin, wherein said modified polyolefin (B) is obtainable by preparing an aqueous suspension containing (a) a nonpolar polyolefin, (b) 1 to 500 parts by weight of a vinyl monomer per 100 parts by weight of said nonpolar polyolefin (a) and (c) 0,01 to 10 parts by weight of a radical polymerization initiator per 100 parts by weight of said vinyl monomer (b), impregnating the particles of said non-polar polyolefin (a) with said vinyl monomer (b), and polymerizing said vinyl monomer (b) by raising the temperature of said aqueous suspension, and the refraction index of said modified polyolefin (B) is substantially identical to that of said polyolefin (A) wherein the difference in refraction index of said polyolefin (A) and said modified polyolefin (B) is at most 0,02, and wherein the vinyl monomer (b) comprises 1 to 50 % by weight of styrene and 99 to 50 % by weight of at least one of methyl methacrylate and n-butyl acrylate.

2. The polyolefin resin composition of Claim 1, wherein said impregnating is carried out by heating said aqueous suspension prior to the polymerization of said vinyl monomer (b) so that the decomposition of said radical polymerization initiator (c) does not substantially occur.

3. The polyolefin resin composition of Claim 1, wherein the amount of the modified polyolefin (B) is 0.1 to 20 parts by weight per 100 parts by weight of the polyolefin (A).

4. The polyolefin resin composition of Claim 1, wherein the amount of the modified polyolefin (B) is 0.1 to 10 parts by weight per 100 parts by weight of the polyolefin (A).

5. The polyolefin resin composition of Claim 1, wherein the polyolefin (A) is a crystalline propylene-based polyolefin obtained by polymerizing a monomer component containing at least 75 % by weight of propylene.

6. The polyolefin resin composition of Claim 1, wherein the nonplar polyolefin (a) is at least one polyolefin selected from the group consisting of polyethylene, polypropylene, polybutylene, poly(4-methylpentene), a copolymer comprising at least two of ethylene, propylene, butylene and 4-methylpentene and a copolymer of at least one of ethylene, propylene, butylene and 4-methylpentene with other copolymerizable monomers.

7. The polyolefin resin composition of Claim 1, wherein said polymerizing of the vinyl monomer (b) is carried out at a temperature equal to or higher than a temperature at which the crystal region of the polyolefin (a) begins to substantially melt.

8. The polyolefin resin composition of Claim 1, wherein the vinyl monomer (b) comprises 80 to 100 % by weight of at least one member selected from the group consisting of an aromatic vinyl compound, an alkyl methacrylate having a $C_1$ to $C_{22}$ alkyl group, an alkyl acrylate having a $C_1$ to $C_{22}$ alkyl group and an unsaturated nitrile compound, and 20 to 0 % by weight of other vinyl monomers copolymerizable therewith.

9. The polyolefin resin composition of Claim 1, wherein the vinyl monomer (b) comprises 1 to 50 % by weight of an aromatic vinyl compound and 99 to 50 % by weight of at least one of an alkyl methacrylate having a $C_1$ to $C_{22}$ alkyl group and an alkyl acrylate having a $C_1$ to $C_{22}$ group.

10. The polyolefin resin composition of Claim 1, wherein the vinyl monomer (b) is at least one of an alkyl methacrylate having a $C_1$ to $C_{22}$ alkyl group and an alkyl acrylate having a $C_1$ to $C_{22}$ alkyl group.

11. The polyolefin resin composition of Claim 8 or 9, wherein the aromatic vinyl compound is styrene or a derivative thereof.

12. The polyolefin resin composition of Claim 8, 9 or 10, wherein the alkyl methacrylate having a $C_1$ to $C_{22}$ alkyl group is at least one member selected from the group consisting of methyl methacrylate, ethyl methacrylate, n-butyl methacrylate and cyclohexyl methacrylate.

13. The polyolefin resin composition of Claim 8, 9 or 10, wherein the alkyl acrylate having a $C_1$ to $C_{22}$ alkyl group is at least one member selected from the group consisting of methyl acrylate, ethyl acrylate, n-butyl acrylate and 2-ethylhexyl acrylate.

14. The polyolefin resin composition of Claim 1 wherein the size of domains of the polymer of the vinyl monomer (b) contained in the particles of the modified polyolefin (B) is not more than 3 μm.

15. The polyolefin resin composition of Claim 1 wherein the size of domains of the polymer of the vinyl monomer (b) contained in the particles of the modified polyolefin (B) is not more than 1 μm.

16. The polyolefin resin composition of any of Claims 1 to 15, which contains 0.01 to 2 parts by weight of a nucleating agent based on 100 parts by weight of the polyolefin resin composition.

17. The polyolefin resin composition of any of Claims 1 to 15, wherein a nucleating agent is previously incorporated in the polyolefin (a) and/or the modified polyolefin (B) in an amount of 0.01 to 2 parts by weight on the basis of 100 parts by weight of the polyolefin resin composition.

18. The polyolefin resin composition of any of Claims 1 to 17, which contains a core-shell graft copolymer having a refraction index substantially identical to that of the polyolefin (A), in an amount of 0.01 to 50 parts by weight on the basis of 100 parts by weight of the polyolefin (A).

19. The polyolefin resin composition of any of Claims 1 to 18, wherein the refraction index of the nonpolar polyolefin (a) is substantially identical to that of the polymer of the vinyl monomer (b).

20. The polyolefin resin composition of any of Claims 1 to 19, wherein the melt flow index of the nonpolar polyolefin (a) is not more than 10 g/10 minutes.

21. The polyolefin resin composition of any of Claims 1 to 19, wherein the melt flow index of the nonpolar polyolefin (a) is not more than 5 g/10 minutes.

22. The polyolefin resin composition of any of Claims 1 to 19, wherein the melt flow index of the nonpolar polyolefin (a) is not more than 1 g/10 minutes.

23. The polyolefin resin composition of Claim 1, wherein the amount of the radical polymerization initiator (c) is from 1 to 5 parts by weight.

24. The polyolefin resin composition of Claim 1, wherein the amount of the remaining radical polymerization initiator (c) after the polymerization is not more than 20 % by weight of the amount of the initiator (c) prior to the initiation of the polymerization.

25. The polyolefin resin composition of Claim 1, wherein the modified polyolefin (B) has a weight average molecular weight equal to or higher than 50 % of that of the polyolefin (a) before the polymerization.

26. The polyolefin resin composition of Claim 1, wherein the difference in refraction index of said polyolefin (A) and said modified polyolefin (B) is at most 0.01.

**Patentansprüche**

1. Polyolefinharz-Zusammensetzung die umfaßt: ein Polyolefin (A) und pro 100 Gewichtsteile dieses Polyolefins (A) 0,1 bis 100 Gewichtsteile eines modifizierten Polyolefins (B), worin das erwähnte Polyolefin (B) erhältlich ist durch Herstellen einer wäßrigen Suspension, die enthält: (a) ein unpolares Polyolefin, pro 100 Gewichtsteile dieses unpolaren Polyolefins (a), (b) 1 bis 500 Gewichtsteile eines Vinylmonomers und, pro 100 Gewichtsteile des Vinylmonomers (b), (c) 0,01 bis 10 Gewichtsteile eines Radikalpolymerisationsstarters, Imprägnieren der Partikel des erwähnten unpolaren Polyolefins (a) mit dem erwähnten Vinylmonomer (b) und Polymerisieren des erwähnten Vinylmonomers (b) durch Erhöhen der Temperatur der erwähnten wäßrigen Suspension,

wobei der Brechungsindex des erwähnten modifizierten Polyolefins (B) im wesentlichen identisch ist zu dem des erwähnten Polyolefins (A) und der Unterschied des Brechungsindex zwischen dem erwähnten Polyolefin (A) und dem erwähnten modifizierten Polyolefin (B) höchstens 0,02 beträgt, und worin das Vinylmonomer (b) von 1 bis 50 Gew.-% Styrol und 99 bis 50 Gew.-% mindestens eines Bestandteils ausgewählt aus Methylmethacrylat und n-Butylacrylat umfaßt.

**2.** Polyolefinharz-Zusammensetzung nach Anspruch 1, worin das erwähnte Imprägnieren durch Erwärmen der erwähnten wäßrigen Suspension vor der Polymerisation des erwähnten Vinylmonomers (b) in der Weise durchgeführt wird, daß die Zersetzung des erwähnten Radikalpolymerisationsstarters (c) im wesentlichen nicht eintritt.

**3.** Polyolefinharz-Zusammensetzung nach Anspruch 1, worin die Menge des modifizierten Polyolefins (B) 0,1 bis 20 Gewichtsteile pro 100 Gewichtsteile des Polyolefins (A) beträgt.

**4.** Polyolefinharz-Zusammensetzung nach Anspruch 1, worin die Menge des modifizierten Polyolefins (B) 0,1 bis 10 Gewichtsteile pro 100 Gewichtsteile des Polyolefins (A) beträgt.

**5.** Polyolefinzharz-Zusammensetzung nach Anspruch 1, worin das Polyolefin (A) ein kristallines Polyolefin auf Propylenbasis ist, das durch Polymerisation einer Monomerkomponente erhalten wird, die mindestens 75 Gew.-% Propylen enthält.

**6.** Polyolefinharz-Zusammensetzung nach Anspruch 1, worin das unpolare Polyolefin (a) mindestens ein Polyolefin ist, das aus der Gruppe ausgewählt wird, die besteht aus Polyethylen, Polypropylen, Polybutylen, Poly(4-methylpenten), einem Copolymer, das mindestens zwei Bestandteile ausgewählt aus Ethylen, Propylen, Butylen und 4-Methylpenten umfaßt, und einem Copolymer aus mindestens einem Bestandteil, ausgewählt aus Ethylen, Propylen, Butylen und 4-Methylpenten, mit anderen copolymerisierbaren Monomeren.

**7.** Polyolefinharz-Zusammensetzung nach Anspruch 1, worin die erwähnte Polymerisation des Vinylmonomers (b) bei einer Temperatur durchgeführt wird, die gleich oder höher ist als die Temperatur, bei der der kristalline Bereich des Polyolefins (a) im wesentlichen zu schmelzen beginnt.

**8.** Polyolefinharz-Zusammensetzung nach Anspruch 1, worin das Vinylmonomer (b) umfaßt: 80 bis 100 Gew.-% mindestens eines Bestandteils, ausgewählt aus der Gruppe, die besteht aus einer aromatischen Vinylverbindung, einem Alkylmethacrylat mit einer $C_1$- bis $C_{22}$-Alkylgruppe, einem Alkylacrylat mit einer $C_1$- bis $C_{22}$-Alkylgruppe und einer ungesättigten Nitrilverbindung, und 20 bis 0 Gew.-% weiterer Vinylmonomere, die damit copolymerisierbar sind.

**9.** Polyolefinharz-Zusammensetzung nach Anspruch 1, worin das Vinylmonomer (b) umfaßt: 1 bis 50 Gew.-% einer aromatischen Vinylverbindung und 99 bis 50 Gew.-% mindestens eines Bestandteils aus einem Alkylmethacrylat mit einer $C_1$- bis $C_{22}$-Alkylgruppe und einem Alkylacrylat mit einer $C_1$- bis $C_{22}$-Gruppe.

**10.** Polyolefinharz-Zusammensetzung nach Anspruch 1, worin das Vinylmonomer (b) mindestens ein Bestandteil ist aus Methylmethacrylat mit einer $C_1$- bis $C_{22}$-Alkylgruppe und einem Alkylacrylat mit einer $C_1$- bis $C_{22}$-Alkylgruppe.

**11.** Polyolefinharz-Zusammensetzung nach Anspruch 8 oder 9, worin die aromatische Vinylverbindung Styrol oder ein Derivat davon ist.

**12.** Polyolefinharz-Zusammensetzung nach Anspruch 8, 9 oder 10, worin das Alkylmethacrylat mit einer $C_1$- bis $C_{22}$-Alkylgruppe mindestens ein Bestandteil ist, der ausgewählt wird aus der Gruppe, die besteht aus Methylmethacrylat, Ethylmethacrylat, n-Butylmethacrylat und Cyclohexylmethacrylat.

**13.** Polyolefinharz-Zusammensetzung nach Anspruch 8, 9 oder 10, worin das Alkylacrlyat mit einer $C_1$- bis $C_{22}$-Alkylgruppe mindestens ein Bestandteil ist, der aus der Gruppe ausgewählt wird, die besteht aus Methylmethacrylat, Ethylacrylat, n-Butylacrylat und 2-Ethylhexylacrylat.

**14.** Polyolefinharz-Zusammensetzung nach Anspruch 1, worin die Größe der Bereiche des Polymers des Vinylmonomers (b), die in den Partikeln des modifizierten Polyolefins (B) enthalten sind, nicht mehr als 3 μm beträgt.

**15.** Polyolefinharz-Zusammensetzung nach Anspruch 1, worin die Größe der Bereiche des Polymers des Vinylmonomers (b), die in den Partikeln des modifizierten Polyolefins (B) enthalten sind, nicht mehr als 1 μm beträgt.

**16.** Polyolefinharz-Zusammensetzung nach irgend einem der Ansprüche 1 bis 15, die 0,01 bis 2 Gewichtsteile eines Keimbildungsmittels, bezogen auf 100 Gewichtsteile der Polyolefinharz-Zusammensetzung enthält.

**17.** Polyolefinharz-Zusammensetzung nach irgend einem der Ansprüche 1 bis 15, worin das Keimbildungsmittel vorher zu dem Polyolefin (a) und/oder dem modifizierten Polyolefin (B) in einer Menge von 0,01 bis 2 Gewichtsteilen, bezogen auf 100 Gewichtsteile der Polyolefinharz-Zusammensetzung, gegeben wird.

18. Polyolefinharz-Zusammensetzung nach irgend einem der Ansprüche 1 bis 17, die ein Kern-Hüll-Pfropfcopolymer mit einem Brechungsindex, der im wesentlichen identisch ist zu dem des Polyolefins (A) in einer Menge von 0,01 bis 50 Gewichtsteilen, bezogen auf 100 Gewichtsteile des Polyolefins (A), enthält.

19. Polyolefinharz-Zusammensetzung nach irgend einem der Ansprüche 1 bis 18, worin der Brechungsindex des unpolaren Polyolefins (a) im wesentlichen identisch ist zu dem des Polymers des Vinylmonomers (b).

20. Polyolefinharz-Zusammensetzung nach irgend einem der Ansprüche 1 bis 19, worin der Schmelzflußindex des unpolaren Polyolefins (a) nicht mehr als 10 g/10 Minuten beträgt.

21. Polyolefinharz-Zusammensetzung nach irgend einem der Ansprüche 1 bis 19, worin der Schmelzflußindex des unpolaren Polyolefins (a) nicht mehr als 6 g/10 Minuten beträgt.

22. Polyolefinharz-Zusammensetzung nach irgend einem der Ansprüche 1 bis 19, worin der Schmelzflußindex des unpolaren Polyolefins (a) nicht mehr als 1 g/10 Minuten beträgt.

23. Polyolefinharz-Zusammensetzung nach Anspruch 1, worin die Menge des Radikalpolymerisationsstarters (c) von 1 bis 5 Gewichtsteilen ist.

24. Polyolefinharz-Zusammensetzung nach Anspruch 1, worin die Menge des nach der Polymerisation verbliebenen Radikalpolymerisationsstarters (c) nicht mehr als 20 Gew.-% der Menge des Starters (c) vor dem Start der Polymerisation beträgt.

25. Polyolefinharz-Zusammensetzung nach Anspruch 1, worin das modifizierte Polyolefin (B) eine massenmittlere Molekülmasse aufweist, die gleich oder größer ist als 50 % des Polyolefins (a) vor der Polymerisation.

26. Polyolefinharz-Zusammensetzung nach Anspruch 1, worin der Unterschied im Brechungsindex zwischen dem Polyolefin (A) und dem erwähnten Polyolefin (B) höchstens 0,01 beträgt.

## Revendications

1. Composition de résine de polyoléfine qui comprend (A) une polyoléfine et (B) 0,1 à 100 parties en poids, pour 100 parties en poids de ladite polyoléfine (A), d'une polyoléfine modifiée, dans laquelle ladite polyoléfine (B) peut être obtenue par préparation d'une suspension aqueuse contenant (a) une polyoléfine non polaire, (b) 1 à 500 parties en poids d'un monomère vinylique pour 100 parties en poids de ladite polyoléfine non polaire (a) et (c) 0,01 à 10 parties en poids d'un amorceur de polymérisation radicalaire pour 100 parties en poids du monomère vinylique (b), imprégnation des particules de ladite polyoléfine non polaire (a) avec ledit monomère vinylique (b), et polymérisation dudit monomère vinylique (b) par élévation de la température de ladite suspension aqueuse, et l'indice de réfraction de ladite polyoléfine (B) est pratiquement identique à celui de ladite polyoléfine (A), où la différence d'indice de réfraction de ladite polyoléfine (A) et de ladite polyoléfine modifiée (B) est d'au plus 0,02, et où le monomère vinylique (b) comprend 1 à 50 % en poids de styrène et 99 à 50 % en poids d'au moins l'un parmi le méthacrylate de méthyle et l'acrylate de n-butyle.

2. Composition de résine de polyoléfine selon la revendication 1, dans laquelle ladite imprégnation est réalisée par chauffage de ladite suspension aqueuse avant la polymérisation dudit monomère vinylique (b) de telle sorte qu'il ne produise pas sensiblement de décomposition dudit amorceur de polymérisation radicalaire (c).

3. Composition de résine de polyoléfine selon la revendication 1, dans laquelle la quantité de la polyoléfine modifiée (B) est de 0,1 à 20 parties en poids pour 100 parties en poids de la polyoléfine (A).

4. Composition de résine de polyoléfine selon la revendication 1, dans laquelle la quantité de la polyoléfine modifiée (B) est de 0,1 à 10 parties en poids pour 100 parties en poids de la polyoléfine (A).

5. Composition de résine de polyoléfine selon la revendication 1, dans laquelle la polyoléfine (A) est une polyoléfine à base de propylène cristalline obtenue par polymérisation d'un composant monomère contenant au moins 75 % en poids de propylène.

6. Composition de résine de polyoléfine selon la revendication 1, dans laquelle la polyoléfine non polaire (a) est au moins une polyoléfine choisie dans l'ensemble constitué par le polyéthylène, le polypropylène, le polybutylène, le poly(4-méthylpentène), un copolymère comprenant au moins deux parmi l'éthylène, le propylène, le butylène et le 4-méthylpentène, et un copolymère d'au moins l'un parmi l'éthylène, le propylène, le butylène et le 4-méthylpentène avec d'autres monomères copolymérisables.

7. Composition de résine de polyoléfine selon la revendication 1, dans laquelle ladite polymérisation du monomère vinylique (b) est réalisée à une température égale ou supérieure à la température à laquelle la région cristalline de la polyoléfine (a) commence à fondre sensiblement.

8. Composition de résine de polyoléfine selon la revendication 1, dans laquelle le monomère vinylique (b) comprend 80 à 100 % en poids d'au moins un élément choisi dans l'ensemble constitué par un composé vinylaromatiqué, un méthacrylate d'alkyle ayant un groupe alkyle en $C_1$ à $C_{22}$, un acrylate d'alkyle ayant un groupe alkyle en $C_1$ à $C_{22}$ et un composé nitrile insaturé, et 20 à 0 % en poids d'autres monomères vinyliques copolymérisable avec lui.

9. Composition de résine de polyoléfine selon la revendication 1, dans laquelle le monomère vinylique (b) comprend 1 à 50 % en poids d'un composé vinylaromatique et 99 à 50 % en poids d'au moins l'un parmi un méthacrylate d'alkyle ayant un groupe alkyle en $C_1$ à $C_{22}$ et un acrylate d'alkyle ayant un groupe en $C_1$ à $C_{22}$.

10. Composition de résine de polyoléfine selon la revendication 1, dans laquelle le monomère vinylique (b) est au moins l'un parmi un méthacrylate d'alkyle ayant un groupe alkyle en $C_1$ à $C_{22}$ et un acrylate d'alkyle ayant un groupe alkyle en $C_1$ à $C_{22}$.

11. Composition de résine de polyoléfine selon la revendication 8 ou 9, dans laquelle le composé vinylaromatique est le styrène ou un de ses dérivés.

12. Composition de résine de polyoléfine selon la revendication 8, 9 ou 10, dans laquelle le méthacrylate d'alkyle ayant un groupe alkyle en $C_1$ à $C_{22}$ est au moins un élément choisi dans l'ensemble constitué par le méthacrylate de méthyle, le méthacrylate d'éthyle, le méthacrylate de n-butyle et le méthacrylate de cyclohexyle.

13. Composition de résine de polyoléfine selon la revendication 8, 9 ou 10, dans laquelle l'acrylate d'alkyle ayant un groupe alkyle en $C_1$ à $C_{22}$ est au moins un élément choisi dans l'ensemble constitué par l'acrylate de méthyle, l'acrylate d'éthyle, l'acrylate de n-butyle et l'acrylate de 2-éthylhexyle.

14. Composition de résine de polyoléfine selon la revendication 1, dans laquelle la taille des domaines du polymère du monomère vinylique (b) contenu dans les particules de la polyoléfine modifiée (B) n'est pas supérieure à 3 µm.

15. Composition de résine de polyoléfine selon la revendication 1, dans laquelle la taille des domaines du polymère du monomère vinylique (b) contenu dans les particules de la polyoléfine modifiée (B) n'est pas supérieure à 1 µm.

16. Composition de résine de polyoléfine selon l'une quelconque des revendications 1 à 15, qui contient 0,01 à 2 parties en poids d'un agent de nucléation pour 100 parties en poids de la composition de résine de polyoléfine.

17. Composition de résine de polyoléfine selon l'une quelconque des revendications 1 à 15, dans laquelle un agent de nucléation est incorporé au préalable dans la polyoléfine (a) et/ou la polyoléfine (B) en une quantité de 0,01 à 2 parties en poids pour 100 parties en poids de la composition de résine de polyoléfine.

18. Composition de résine de polyoléfine selon l'une quelconque des revendications 1 à 17, qui contient un copolymère greffé coeur/gaine ayant un indice de réfraction pratiquement identique à celui de la polyoléfine (A), en une quantité de 0,01 à 50 parties en poids pour 100 parties en poids de la polyoléfine (A).

19. Composition de résine de polyoléfine selon l'une quelconque des revendications 1 à 18, dans laquelle l'indice de réfraction de la polyoléfine non polaire (a) est pratiquement identique à celui du polymère du monomère vinylique (b).

20. Composition de résine de polyoléfine selon l'une quelconque des revendications 1 à 19, dans laquelle l'indice de fluidité à chaud de la polyoléfine non polaire (a) n'est pas supérieur à 10 g/10 minutes.

21. Composition de résine de polyoléfine selon l'une quelconque des revendications 1 à 19, dans laquelle l'indice de fluidité à chaud de la polyoléfine non polaire (a) n'est pas supérieur à 5 g/10 minutes.

22. Composition de résine de polyoléfine selon l'une quelconque des revendications 1 à 19, dans laquelle l'indice de fluidité à chaud de la polyoléfine non polaire (a) n'est pas supérieur à 1 g/10 minutes.

23. Composition de résine de polyoléfine selon la revendication 1, dans laquelle la quantité de l'amorceur de polymérisation radicalaire (c) est de 1 à 5 parties en poids.

24. Composition de résine de polyoléfine selon la revendication 1, dans laquelle la quantité de l'amorceur de polymérisation radicalaire (c) restant après la polymérisation n'est pas supérieure à 20 % en poids de la quantité de l'amorceur (c) avant l'initiation de la polymérisation.

25. Composition de résine de polyoléfine selon la revendication 1, dans laquelle la polyoléfine modifiée (B) a une masse moléculaire moyenne en masse égale ou supérieure à 50 % de celle de la polyoléfine (a) avant la polymérisation.

26. Composition de résine de polyoléfine selon la revendication 1, dans laquelle la différence d'indice de réfraction de ladite polyoléfine (A) et de ladite polyoléfine modifiée (B) est d'au plus 0,01.